(19) Europäisches Patentamt
European Patent Office
Office européen des brevets

(11) **EP 1 909 579 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(21) Anmeldenummer: **06792533.9**

(22) Anmeldetag: **20.07.2006**

(51) Int Cl.:
***A01N 43/90*** *(2006.01)*

(86) Internationale Anmeldenummer:
**PCT/EP2006/064463**

(87) Internationale Veröffentlichungsnummer:
**WO 2007/012598 (01.02.2007 Gazette 2007/05)**

(54) **FUNGIZIDE MISCHUNGEN AUF BASIS VON AZOLOPYRIMIDINYLAMINEN**

FUNGICIDAL MIXTURES BASED ON AZOLOPYRIMIDINYLAMINES

MELANGES FONGICIDES A BASE D'AZOLOPYRIMIDINYLAMINES

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK**

(30) Priorität: **27.07.2005 DE 102005035688**

(43) Veröffentlichungstag der Anmeldung:
**16.04.2008 Patentblatt 2008/16**

(73) Patentinhaber: **BASF SE**
**67056 Ludwigshafen (DE)**

(72) Erfinder:
- **BECK, Christine**
  **68163 Mannheim (DE)**
- **NIEDENBRÜCK, Matthias**
  **67117 Limburgerhof (DE)**
- **SCHERER, Maria**
  **76829 Landau (DE)**
- **STIERL, Reinhard**
  **67251 Freinsheim (DE)**
- **STRATHMANN, Siegfried**
  **67117 Limburgerhof (DE)**
- **HÜNGER, Udo**
  **68167 Mannheim (DE)**

(56) Entgegenhaltungen:
**EP-A1- 0 988 790**
**EP-A2- 0 071 792**
**WO-A-03/009687**
**WO-A-2005/087773**
**WO-A2-2005/032249**
**US-B1- 6 268 371**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 909 579 B1

## Beschreibung

Die vorliegende Erfindung betrifft fungizide Mischungen, enthaltend als aktive Komponenten

1) Azolopyrimidinylamine der Formel I,

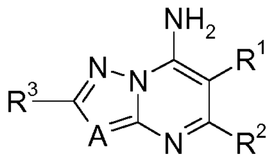

I

in der die Substituenten folgende Bedeutung haben:

$R^1$ $C_5$-$C_{12}$-Alkyl;
$R^2$ $C_1$-$C_{12}$-Alkyl, $C_1$-$C_4$-Halogenalkyl, oder $C_1$-$C_4$-Alkoxy-$C_1$-$C_4$-alkyl;
$R^3$ Wasserstoff oder $NH_2$;
A N;

und
2) mindestens einen Wirkstoff II ausgewählt aus den folgenden Gruppen:

A) Azole ausgewählt aus Bitertanol, Bromuconazole, Cyproconazole, Difenoconazole, Diniconazole, Enilconazol, Epoxiconazole, Fluquinconazole, Fenbuconazole, Flusilazole, Flutriafol, Hexaconazol, Imibenconazole, Ipconazole, Metconazol, Myclobutanil, Penconazole, Propiconazole, Prothioconazole, Simeconazole, Triadimefon, Triadimenol, Tebuconazole, Tetraconazole, Triticonazole; Prochloraz, Pefurazoate, Imazalil, Triflumizole, Cyazofamid; Benomyl, Carbendazim, Thiabendazole, Fuberidazole; Ethaboxam, Etridiazole, Hymexazole;
B) Strobilurine ausgewählt aus Azoxystrobin, Dimoxystrobin, Enestroburin, Fluoxastrobin, Kresoxim-methyl, Metominostrobin, Orysastrobin, Picoxystrobin, Pyraclostrobin, Trifloxystrobin, oder (2-Chlor-5-[1-(3-methylbenzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethylester, 2-(ortho-((2,5-Dimethylphenyl-oxymethylen)phenyl)-3-methoxyacrylsäuremethylester;
C) Carbonsäureamide ausgewählt aus Carboxin, Benalaxyl, Boscalid, Fenhexamid, Flutolanil, Furametpyr, Mepronil, Metalaxyl, Mefenoxam, Ofurace, Oxadixyl, Oxycarboxin, Penthiopyrad, Thifluzamide, Tiadinil, 4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid, 3-Difluormethyl-1-methyl-pyrazol-4-carbonsäure-(3',4'dichlor-5-fluor-biphenyl-2-yl)-amid; 3,4-Dichlor-N-(2-cyanophenyl)-isothiazol-5-carbonsäureamid; Dimethomorph, Flumorph; Flumetover, Fluopicolide (Picobenzamid), Zoxamide; Carpropamid, Diclocymet, Mandipropamid; N-(2-{4-[3-(4-Chlor-phenyl)-prop-2-inyloxy]-3-methoxy-phenyl}-ethyl)-2-methansulfonylamino-3-methyl-butyramid, N-(2-{4-[3-(4-Chlor-phenyl)prop-2-inyloxy]-3-methoxy-phenyl}-ethyl)-2-ethansulfonylamino-3-methylbutyramid;
D) Heterocylische Verbindungen ausgewählt aus Fluazinam, Pyrifenox; Bupirimate, Cyprodinil, Fenarimol, Ferimzone, Mepanipyrim, Nuarimol, Pyrimethanil; Triforine; Fenpiclonil, Fludioxonil; Aldimorph, Dodemorph, Fenpropimorph, Tridemorph;Fenpropidin, Iprodione, Procymidone, Vinclozolin; Famoxadone, Fenamidone, Octhilinone, Probenazole; Amisulbrom, Anilazin, Diclomezine, Pyroquilon, Proquinazid, Tricyclazole; 5-Chlor-7-(4-methyl-piperidin-1-yl)-6-(2,4,6-trifluor-phenyl)-[1,2,4]triazolo[1,5-a]pyrimidin, 2-Butoxy-6-iodo-3-propyl-chromen-4-on; Acibenzolar-S-methyl, Captafol, Captan, Dazomet, Folpet, Fenoxanil, Quinoxyfen; 3-[5-(4-Chlorphenyl)-2,3-dimethyl-isoxazolidin-3-yl]-pyridin;
E) Carbamate ausgewählt aus Mancozeb, Maneb, Metam, Metiram, Ferbam, Propineb, Thiram, Zineb, Ziram; Diethofencarb, Iprovalicarb, Flubenthiavalicarb, Propamocarb; 3-(4-Chlor-phenyl)-3-(2-isopropoxycarbonylamino-3-methyl-butyrylamino)-propansäuremethylester;
und
F) Sonstige Wirkstoffe, ausgewählt aus Guanidine: Dodine, Iminoctadine, Guazatine; Antibiotika: Kasugamycin, Streptomycin, Polyoxine, Validamycin A; Nitrophenylderivate: Binapacryl, Dinocap, Dinobuton; Schwefelhaltige Heterocyclylverbindungen: Dithianon, Isoprothiolane; Organometallverbindungen: Fentin Salze, wie Fentin-Acetat; Organophosphorverbindungen: Edifenphos, Iprobenfos, Fosetyl, Fosetyl-Aluminium, Phosphorige Säure und ihre Salze, Pyrazophos, Tolclofos-methyl; Organochlorverbindungen: Chlorothalonil, Dichlofluanid, Flusulfamide, Hexachlorbenzol, Phthalid, Pencycuron, Quintozen, Thiophanate-Methyl, Tolylfluanid; Anorganische Wirkstoffe: Bordeaux Brühe, Kupferacetat, Kupferhydroxid, Kupferoxychlorid, basisches Kupfersulfat, Schwefel; Sonstige: Cyflufenamid, Cymoxanil, Dimethirimol, Ethirimol, Furalaxyl, Metrafenone und Spiroxamine; Wachstumsretardantien: Prohexadion und seine Salze, Trinexapac-ethyl, Chlormequat, Mepiquat-chlorid und Diflufenzopyr;

in einer synergistisch wirksamen Menge.

Außerdem betrifft die Erfindung ein Verfahren zur Bekämpfung von pflanzenpathogenen Schadpilzen, dadurch gekennzeichnet, dass man die Pilze, deren Lebensraum oder die vor Pilzbefall zu schützenden Pflanzen, den Boden oder Saatgüter mit einer wirksamen Menge einer der genannten Verbindungen I und mindestens einer der genannte Verbindungen II behandelt.

Ferner betrifft die Erfindung Mittel, enthaltend einen flüssigen oder festen Trägerstoff, und eine der genannten Mischungen; ein weiterer Aspekt ist ein Verfahren zur Herstellung besagter Mittel durch Verstrecken der Verbindungen I und II mit flüssigen oder festen Trägerstoffen, und Saatgut enthaltend besagte Mischung in einer Menge von 1 bis 1000 g/100 kg.

Die als Komponente 1 voranstehend bezeichneten Azolopyrimidin-7-ylamine der Formel I, deren Herstellung und dessen Wirkung gegen Schadpilze ist aus der Literatur bekannt (EP-A 71 792; EP-A 141 317; WO 03/009687; WO 05/087771; WO 05/087772; WO 05/087773; PCT/EP/05/002426; PCT/EP2006/050922; PCT/EP2006/060399.

Die voranstehend als Komponente 2 genannten Wirkstoffe II, ihre Herstellung und ihre Wirkung gegen Schadpilze sind allgemein bekannt (vgl.: http://www.hclrss.demon.co.uk/index.html); sie sind kommerziell erhältlich.

Bitertanol, β-([1,1'-Biphenyl]-4-yloxy)-a-(1,1-dimethylethyl)-1*H*-1,2,4-triazol-1-ethanol (DE 23 24 020),
Bromuconazole, 1-[[4-Brom-2-(2,4-dichlorphenyl)tetrahydro-2-furanyl]methyl]-1*H*-1,2,4-triazol (Proc. 1990 Br. Crop. Prot. Conf. - Pests Dis. Bd. 1, S. 459),
Cyproconazol, 2-(4-Chlor-phenyl)-3-cyclopropyl-1-[1,2,4]triazol-1-yl-butan-2-ol (US 4 664 696);
Difenoconazole, 1-{2-[2-Chlor-4-(4-chlor-phenoxy)-phenyl]-4-methyl-[1,3]dioxolan-2-ylmethyl}-1 H-[1,2,4]triazol (GB-A 2 098 607);
Diniconazole, (β*E*)-β-[(2,4-Dichlorphenyl)methylen]-a-(1,1-dimethylethyl)-1*H*-1,2,4-triazol-1-ethanol (Noyaku Kagaku, 1983, Bd. 8, S. 575),
Enilconazol (Imazalil), 1-[2-(2,4-Dichlorphenyl)-2-(2-propenyloxy)ethyl]-1*H*-imidazol (Fruits, 1973, Bd. 28, S. 545),
Epoxiconazol, (2*RS*,3*SR*)-1-[3-(2-Chlorphenyl)-2,3-epoxy-2-(4-fluorphenyl)propyl]-1*H*-1,2,4-triazol (EP-A 196 038);
Fluquiconazol, 3-(2,4-Dichlor-phenyl)-6-fluor-2-[1,2,4]-triazol-1-yl-3H-quinazolin-4-on (Proc. Br. Crop Prot. Conf.-Pests Dis., 5-3, 411 (1992));
Fenbuconazole, α-[2-(4-Chlorphenyl)ethyl]-a-phenyl-1*H*-1,2,4-triazol-1-propannitril (Proc. 1988 Br. Crop Prot. Conf. - Pests Dis. Bd. 1, S. 33),
Flusilazol, 1-{[Bis-(4-fluor-phenyl)-methyl-silanyl]-methyl}-1H-[1,2,4]triazol (Proc. Br. Crop Prot. Conf.-Pests Dis., 1, 413 (1984));
Flutriafol, α-(2-Fluorphenyl)-a-(4-fluorphenyl)-1*H*-1,2,4-triazol-1-ethanol (EP 15 756),
Hexaconazol, 2-(2,4-Dichlor-phenyl)-1-[1,2,4]triazol-1-yl-hexan-2-ol (CAS RN [79983-71-4]);
Imibenconazole, (4-Chlorphenyl)methyl *N*-(2,4-dichlorphenyl)-1*H*-1,2,4-triazol-1-ethan-imidothioat ((Proc. 1988 Br. Crop Prot. Conf. - Pests Dis. Bd. 2, S. 519),
Ipconazole, 2-[(4-Chlorphenyl)methyl]-5-(1-methylethyl)-1-(1*H*-1,2,4-triazol-1-yl-methyl)cyclopentanol (EP 267 778),
Metconazol, 5-(4-Chlor-benzyl)-2,2-dimethyl-1-[1,2,4]triazol-1-ylmethyl-cyclopentanol (GB 857 383);
Myclobutanil, 2-(4-Chlor-phenyl)-2-[1,2,4]triazol-1-ylmethyl-pentan-nitril (CAS RN [88671-89-0]);
Penconazol, 1-[2-(2,4-Dichlor-phenyl)-pentyl]-1H-[1,2,4]triazol (Pesticide Manual, 12th Ed. (2000), Seite 712);
Propiconazole, 1-[[2-(2,4-Dichlorphenyl)-4-propyl-1,3-dioxolan-2-yl]methyl]-1*H*-1,2,4-triazol (BE 835 579),
Prothioconazol, 2-[2-(1-Chlor-cyclopropyl)-3-(2-chlor-phenyl)-2-hydroxy-propyl]-2,4-dihydro-[1,2,4]triazol-3-thion (WO 96/16048);
Simeconazole, α-(4-Fluorphenyl)-α-[(trimethylsilyl)methyl]-1*H*-1,2,4-triazol-1-ethanol [CAS RN 149508-90-7],
Triadimefon, 1-(4-Chlorphenoxy)-3,3-dimethyl-1-(1*H*-1,2,4-triazol-1-yl)-2-butanon;
Triadimenol, β-(4-Chlorphenoxy)-α-(1,1-dimethylethyl)-1*H*-1,2,4-triazol-1-ethanol; Tebuconazol, 1-(4-Chlorphenyl)-4,4-dimethyl-3-[1,2,4]triazol-1-ylmethyl-pentan-3-ol (EP-A 40 345);
Tetraconazole, 1-[2-(2,4-Dichlorphenyl)-3-(1,1,2,2-tetrafluorethoxy)propyl]-1*H*-1,2,4-triazol (EP 234 242),
Triticonazole, (5*E*)-5-[(4-Chlorphenyl)methylen]-2,2-dimethyl-1-(1*H*-1,2,4-triazol-1-ylmethyl)cyclopentanol (FR 26 41 277),
Prochloraz, Imidazol-1-carbonsäure-propyl-[2-(2,4,6-trichlor-phenoxy)-ethyl]-amid (US 3 991 071);
Pefurazoate, 4-Pentenyl 2-[(2-furanylmethyl)(1*H*-imidazol-1-ylcarbonyl)amino]butanoat [CAS RN 101903-30-4],

Triflumizol, (4-Chlor-2-trifluormethyl-phenyl)-(2-propoxy- 1-[1,2,4]triazol-1-yl-ethyliden)-amin (JP-A 79/119 462)
Cyazofamid, 4-Chlor-2-cyano-*N,N*-dimethyl-5-(4-methylphenyl)-1*H*-imidazol-1-sulfonamid (CAS RN 120116-88-3],
Benomyl, 2-Acetylamino-benzoimidazol-1-carbonsäurebutylamid (US 3 631 176);
Carbendazim, (1 H-Benzoimidazol-2-yl)-carbaminsäuremethylester (US 3 657 443);
Thiabendazole, 2-(1,3-Thiazol-4-yl)benzimidazol (US 3 017 415),
Fuberidazole, 2-(2-Furanyl)-1*H*-benzimidazol (DE 12 09 799),
Ethaboxam, *N*-(Cyano-2-thienylmethyl)-4-ethyl-2-(ethylamino)-5-thiazolcarboxamid (EP-A 639 574),
Etridiazole,
Hymexazole, 5-Methyl-1,2-oxazol-3-ol (JP 518249, JP 532202),
Azoxystrobin, 2-{2-[6-(2-Cyano-1-vinyl-penta-1,3-dienyloxy)-pyrimidin-4-yloxy]-phenyl}-3-methoxy-acrylsäuremethylester (EP-A 382 375),
Dimoxystrobin, (*E*)-2-(methoxyimino)-*N*-methyl-2-[a-(2,5-xylyloxy)-o-tolyl]acetamid (EP-A 477 631);
Fluoxastrobin, (*E*)-{2-[6-(2-chlorphenoxy)-5-fluorpyrimidin-4-yloxy]phenyl}(5,6-dihydro-1,4,2-dioxazin-3-yl)methanon-*O*-methyloxim (WO 97/27189);
Kresoxim-methyl, (*E*)-Methoxyimino[α-(*o*-tolyloxy)-o-tolyl]essigsäuremethylester (EP-A 253 213);
Metominostrobin, (*E*)-2-(Methoxyimino)-*N*-methyl-2-(2-phenoxyphenyl)acetamid (EP-A 398 692);
Orysastrobin, (2*E*)-2-(Methoxyimino)-2-{2-[(3*E*,5*E*,6*E*)-5-(methoxyimino)-4,6-dimethyl-2,8-dioxa-3,7-diazanona-3,6-dien-1-yl]phenyl}-*N*-methylacetamid (WO 97/15552);
Picoxystrobin, 3-Methoxy-2-[2-(6-trifluormethyl-pyridin-2-yloxymethyl)-phenyl]-acryl-säuremethylester (EP-A 278 595);
Pyraclostrobin, *N*-{2-[1-(4-Chlorphenyl)-1*H*-pyrazol-3-yloxymethyl]phenyl}(*N*-methoxy)carbaminsäuremethylester (WO-A 96/01256);
Trifloxystrobin, (*E*)-Methoxyimino-{(*E*)-α-[1-(α,α,α-trifluor-*m*-tolyl)ethylidenaminooxy]-*o*-tolyl}essigsäuremethylester (EP-A 460 575);
Carboxin, 5,6-Dihydro-2-methyl-*N*-phenyl-1,4-oxathiin-3-carboxamid (US 3 249 499), Benalaxyl, Methyl *N*-(phenylacetyl)-*N*-(2,6-xylyl)-DL-alaninat (DE 29 03 612),
Boscalid, 2-Chlor-*N*-(4'-chlorbiphenyl-2-yl)nicotinamid (EP-A 545 099);
Fenhexamid, N-(2,3-dichlor-4-hydroxyphenyl)-1-methylcyclohexancarboxamid (Proc. Br. Crop Prot. Conf. - Pests Dis., 1998, Bd. 2, S. 327);
Flutolanil, α,α,α-Trifluor-3'-isopropoxy-*o*-toluanilid (JP 1104514),
Furametpyr, 5-Chlor-*N*-(1,3-dihydro-1,1,3-trimethyl-4-isobenzofuranyl)-1,3-dimethyl-1*H*-pyrazol-4-carboxamid [CAS RN 123572-88-3],
Mepronil, 3'-Isopropoxy-o-toluanilid (US 3 937 840),
Metalaxyl, Methyl *N*-(methoxyacetyl)-*N*-(2,6-xylyl)-DL-alaninat (GB 15 00 581);
Mefenoxam, Methyl *N*-(2,6-dimethylphenyl)-*N*-(methoxyacetyl)-D-alaninat;
Ofurace, (*RS*)-α-(2-Chlor-*N*-2,6-xylylacetamido)-γ-butyrolacton [CAS RN 58810-48-3];
Oxadixyl; *N*-(2,6-Dimethylphenyl)-2-methoxy-*N*-(2-oxo-3-oxazolidinyl)acetamid (GB 20 58 059),
Oxycarboxin, 5,6-Dihydro-2-methyl-1,4-oxathiin-3-carboxanilid 4,4-dioxid (US 3399214),
Penthiopyrad, *N*-[2-(1,3-dimethylbutyl)-3-thienyl]-1-methyl-3-(trifluormethyl)-1*H*-pyrazol-4-carboxamid (JP 10130268),
Thifluzamide, *N*-[2,6-Dibrom-4-(trifluormethoxy)phenyl]-2-methyl-4-(trifluoromethyl)-5-thiazolcarboxamid;
Tiadinil, 3'-Chlor-4,4'-dimethyl-1,2,3-thiadiazol-5-carboxanilid [CAS RN 223580-51-6],
Dimethomorph, 3-(4-Chlorphenyl)-3-(3,4-dimethoxyphenyl)-1-morpholin-4-yl-propenon (EP-A 120 321);
Flumorph, 3-(4-Fluorphenyl)-3-(3,4-dimethoxyphenyl)-1-morpholin-4-yl-propenon (EP-A 860 438);
Flumetover, 2-(3,4-Dimethoxyphenyl)-*N*-ethyl-α,α,α-trifluor-*N*-methyl-*p*-toluamid [AGROW Nr. 243, 22 (1995)],
Fluopicolide (Picobenzamid), 2,6-Dichlor-N-(3-chlor-5-trifluormethyl-pyridin-2-ylmethyl)-benzamid (WO 99/42447);
Zoxamid, (RS)-3,5-Dichlor-*N*-(3-chlor-1-ethyl-1-methyl-2-oxopropyl)-*p*-toluamid [CAS RN 156052-68-5];
Carpropamid, 2,2-Dichloro-*N*-[1-(4-chlorphenyl)ethyl]-1-ethyl-3-methylcyclopropan-carboxamid [CAS RN 104030-54-8],
Diclocymet, 2-Cyano-*N*-[(1R)-1-(2,4-dichlorphenyl)ethyl]-3,3-dimethylbutanamid;
Mandipropamid, (*RS*)-2-(4-Chlorphenyl)-*N*-[3-methoxy-4-(prop-2-inyloxy)phenethyl]-2-(prop-2-inyloxy)acetamid [CAS-RN 374726-62-2];
Fluazinam, 3-Chlor-N-[3-chlor-2,6-dinitro-4-(trifluoromethyl)phenyl]-5-(trifluormethyl)-2-pyridin-amin (The Pecticide Manual, Hrsg. The British Crop Protection Council, 10. Aufl. (1995), S. 474);
Pyrifenox, 1-(2,4-Dichlorphenyl)-2-(3-pyridinyl)ethanon-*O*-methyloxim (EP-A 49 854);
Bupirimate, 5-Butyl-2-ethylamino-6-methylpyrimidin-4-yl-dimethylsulfamat [CAS RN 41483-43-6];
Cyprodinil, (4-Cyclopropyl-6-methyl-pyrimidin-2-yl)-phenyl-amin (EP-A 310 550);
Fenarimol, (4-Chlor-phenyl)-(2-chlor-phenyl)-pyrimidin-5-yl-methanol (GB 12 18 623); Ferimzone, (Z)-2'-Methylacetophenon 4,6-dimethylpyrimidin-2-yl-hydrazon [CAS RN 89269-64-7];
Mepanipyrim, (4-Methyl-6-prop-1-inyl-pyrimidin-2-yl)-phenyl-amin (EP-A 224 339);
Nuarimol, α-(2-Chlorphenyl)-α-(4-fluorphenyl)-5-pyrimidinmethanol (GB 12 18 623); Pyrimethanil, 4,6-Dimethyl-pyrimidin-2-yl)-phenyl-amin (DD-A 151 404);
Triforine, *N,N'*-{Piperazine-1,4-diylbis[(trichlormethyl)methylen]}diformamid (DE 19 01 421);
Fenpiclonil, 4-(2,3-Dichlor-phenyl)-1 H-pyrrol-3-carbonitril (Proc. 1988 Br. Crop Prot. Conf. - Pests Dis., Bd. 1, S. 65);
Fludioxonil, 4-(2,2-Difluor-benzo[1,3]dioxol-4-yl)-1H-pyrrol-3-carbonitril (The Pecticide Manual, Hrsg. The British Crop Protection Council, 10. Aufl. (1995), S. 482);
Aldimorph, 4-Alkyl-2,5(oder 2,6)-dimethylmorpholine, enthaltend 65-75% 2,6-Dimethylmorpholine und 25-35% 2,5-Dimethylmorpholine, wobei mehr als 85% 4-Dodecyl-2,5(oder 2,6)-dimethylmorpholin ist und "Alkyl" auch Octyl, Decyl, Tetradecyl oder Hexadecyl sein kann und wobei das cis/trans Verhältnis 1:1 ist;
Dodemorph, 4-Cyclododecyl-2,6-dimethylmorpholin (DE 1198125),
Fenpropimorph, (*RS*)-*cis*-4-[3-(4-*tert*-Butylphenyl)-2-methylpropyl]-2,6-dimethyl-morpholin (DE 27 52 096),
Tridemorph, 2,6-Dimethyl-4-tridecylmorpholin (DE 11 64 152),
Fenpropidin, (*RS*)-1-[3-(4-*tert*-Butylphenyl)-2-methylpropyl]piperidin (DE 27 52 096) Iprodion, 3-(3,5-Dichlor-phenyl)-2,4-dioxo-imidazolidin-1-carbonsäureisopropylamid (GB 13 12 536);
Procymidon, *N*-(3,5-Dichlorphenyl)-1,2-dimethylcyclopropan-1,2-dicarboximid (US 3 903 090);
Vinclozolin, 3-(3,5-Dichlor-phenyl)-5-methyl-5-vinyl-oxazolidin-2,4-dion (DE-OS 22 07 576);
Famoxadon, (RS)-3-Anilino-5-methyl-5-(4-phenoxyphenyl)-1,3-oxazolidin-2,4-dion; Fenamidon, (S)-1-Anilino-4-methyl-2-methylthio-4-phenylimidazolin-5-on;
Octhilinone,
Probenazole, 3-Allyloxy-1,2-benzothiazol 1,1-dioxid;
Amisulbrom, 3-(3-Brom-6-fluor-2-methyl-indol-1-sulfonyl)-[1,2,4]triazol-1-sulfonsäure-dimethylamid (WO 03/053145);
Anilazin, 4,6-Dichlor-*N*-(2-chlorphenyl)-1,3,5-triazin-2-amin (US 2 720 480); Diclomezine, 6-(3,5-Dichlorphenyl-*p*-tolyl)pyridazin-3(2*H*)-on;
Pyroquilon,
Proquinazid, 6-Jodo-2-propoxy-3-propylquinazolin-4(3*H*)-on (WO 97/48684);
Tricyclazole, 5-Methyl-1,2,4-triazolo[3,4-*b*]benzothiazol (GB 14 19 121);
Acibenzolar-S-methyl, Benzo[1,2,3]thiadiazol-7-carbothionsäuremethylester;
Captafol, *N*-(1,1,2,2-Tetrachloroethylthio)cyclohex-4-en-1,2-dicarboximid;
Captan, 2-Trichlormethylsulfanyl-3a,4,7,7a-tetrahydro-isoindol-1,3-dion (US 2 553 770);
Dazomet, 3,5-Dimethyl-1,3,5-thiadiazinan-2-thion;
Folpet, 2-Trichlormethylsulfanyl-isoindol-1,3-dion (US 2 553 770);
Fenoxanil, *N*-(1-Cyano-1,2-dimethylpropyl)-2-(2,4-dichlorphenoxy)propanamid; Quinoxyfen, 5,7-Dichlor-4-(4-fluorphenoxy)-chinolin (US 5 240 940);
Mancozeb, Mangan-ethylenbis(dithiocarbamat) Zinkkomplex (US 3 379 610);
Maneb, Mangan-ethylenbis(dithiocarbamat) (US 2 504 404);
Metam, Methyldithiocarbaminsäure (US 2 791 605);
Metiram, Zinkammoniat-ethylenbis(dithiocarbamat) (US 3 248 400);
Propineb, Zink Propylenbis(dithiocarbamat) Polymer (BE 611 960);
Ferbam, Eisen(3+)dimethyldithiocarbamat (US 1 972 961);
Thiram, Bis(dimethylthiocarbamoyl)disulfid (DE 642 532);
Ziram, Dimethyldithiocarbamat;
Zineb, Zink-ethylenbis(dithiocarbamat) (US 2 457 674);
Diethofencarb, Isopropyl 3,4-diethoxycarbanilat;
Iprovalicarb, [(1S)-2-Methyl-1-(1-p-tolyl-ethylcarbamoyl)-propyl]-carbaminsäure-isopropylester (EP-A 472 996);
Flubenthiavalicarb (Benthiavalicarb), {(S)-1-[(1R)-1-(6-Fluor-benzothiazol-2-yl)-ethylcarbamoyl]-2-methyl-propyl}-carbaminsäureisopropylester (JP-A 09/323 984);
Propamocarb, 3-(Dimethylamino)propylcarbaminsäurepropylester (DE 16 43 040);
Dodine, (2,4-Dichlorphenoxy)essigsäure (US 2 867 562);
Iminoctadine, Bis(8-guanidino-octyl)amin (GB 11 14 155);
Guazatine, Mischung aus Produkten der Amidierung von Iminodi(octamethylen)diamin, hauptsächlich Iminoctadine;
Kasugamycin, 1L-1,3,4/2,5,6-1-Deoxy-2,3,4,5,6-pentahydroxycyclohexyl 2-amino-2,3,4,6-tetradeoxy-4-(α-iminoglycino)-α-D-*arabino*-hexopyranosid;
Streptomycin, *O*-2-Deoxy-2-methylamino-α-L-glucopyranosyl-(1→2)-*O*-5-deoxy-3-*C*-formyl-α-L-lyxofuranosyl-(1→4)-$N^1$,$N^3$-diamidino-D-streptamin;
Polyoxine, 5-(2-Amino-5-*O*-carbamoyl-2-deoxy-L-xylonamido)-1-(5-carboxy-1,2,3,4-tetrahydro-2,4-dioxopyrimidin-1-yl)-1,5-dideoxy-β-D-allofuranuronsäure und ihre Salze; Validamycin A,
Binapacryl, (*RS*)-2-*sec*-Butyl-4,6-dinitrophenyl 3-methylcrotonat;
Dinocap, die Mischung aus 2,6-Dinitro-4-octylphenylcrotonat und 2,4-Dinitro-6-octyl-phenylcrotonat, wobei "Octyl" eine Mischung aus 1-Methylheptyl, 1-Ethylhexyl und 1-Propylpentyl bedeutet (US 2 526 660);
Dinobuton, (*RS*)-2-*sec*-Butyl-4,6-dinitrophenyl isopropyl carbonat;
Dithianon, 5,10-Dioxo-5,10-dihydro-naphtho[2,3-b][1,4]dithiin-2,3-dicarbonitril (GB 857 383);
Isoprothiolane, Indol-3-ylessigsäure;
Fentin-Acetat, Triphenylzinnacetat (US 3 499 086);
Edifenphos, *O*-Ethyl *S*,*S*-diphenyl phosphordithioat;
Iprobenfos, *S*-Benzyl-*O,O*-di-isopropyl-phosphorothioat (Jpn. Pesticide Inf., No. 2, S. 11 (1970));
Fosetyl, Fosetyl-Aluminium, (Aluminium) Ethylphosphonat (FR 22 54 276);
Pyrazophos, 2-Diethoxyphosphinothioyloxy-5-methylpyrazolo[1,5-a]pyrimidin-6-carbon-säureethylester (DE 15 45 790);
Tolclofos-methyl, *O*-2,6-Dichlor-*p*-tolyl *O,O*-dimethyl phosphorthioat (GB 14 67 561); Chlorothalonil, 2,4,5,6-Tetrachlor-isophthalonitril (US 3 290 353);
Dichlofluanid, N-Dichlorfluormethylthio-*N'*,*N'*-dimethyl-*N*-phenylsulfamid (DE 11 93 498);
Flusulfamide, 2',4-Dichlor-α,α,α-trifluor-4'-nitro-*m*-tololsulfonanilid (EP-A 199 433); Hexachlorbenzol (C. R. Seances Acad. Agric. Fr., Bd. 31, S. 24 (1945));
Phthalid (DE 16 43 347);
Pencycuron, 1-(4-Chlor-benzyl)-1-cyclopentyl-3-phenyl-harnstoff (DE 27 32 257); Quintozen, Pentachlornitrobenzol (DE 682 048);
Thiophanat-methyl, 1,2-Phenylenbis(iminocarbonothioyl)bis(dimethylcarbamat) (DE-OS 19 30 540);
Tolylfluanid, *N*-Dichlorfluormethylthio-*N',N'*-dimethyl-*N*-*p*-tolylsulfamid (DE 11 93 498); Bordeaux Brühe, Mischung aus Calciumhydroxid und Kupfer(II)sulfat;
Kupferhydroxid, $Cu(OH)_2$ ; Kupferoxychlorid, $Cu_2Cl(OH)_3$;
Cyflufenamid, (*Z*)-*N*-[α-(Cyclopropylmethoxyimino)-2,3-difluor-6-(trifluormethyl)benzyl]-2-phenylacetamid (WO 96/19442);
Cymoxanil, 1-(2-Cyano-2-methoxyiminoacetyl)-3-ethylharnstoff (US 3 957 847);
Dimethirimol, 5-Butyl-2-dimethylamino-6-methylpyrimidin-4-ol (GB 11 82 584);
Ethirimol, 5-Butyl-2-ethylamino-6-methylpyrimidin-4-ol (GB 11 82 584);
Furalaxyl, *N*-(2-Furoyl)-*N*-(2,6-xylyl)-DL-alaninsäuremethylester (GB 14 48 810);
Metrafenon, 3'-Brom-2,3,4,6'-tetramethoxy-2',6-dimethylbenzophenon (US 5 945 567);
Spiroxamin, (8-tert-Butyl-1,4-dioxa-spiro[4.5]dec-2-yl)-diethyl-amin (EP-A 281 842).
Die nach IUPAC benannten Verbindungen, ihre Herstellung und ihre fungizide Wirkung sind ebenfalls bekannt:

(2-Chlor-5-[1-(3-methyl-benzyloxyimino)-ethyl]-benzyl)-carbaminsäuremethylester,
(2-Chlor-5-[1-(6-methyl-pyridin-2-ylmethoxyimino)-ethyl]-benzyl)-carbaminsäuremethylester (EP-A 12 01 648);
2-(ortho-((2,5-Dimethylphenyl-oxymethylen)phenyl)-3-methoxy-acrylsäuremethylester (EP-A 226 917);
5-Chlor-7-(4-methyl-piperidin-1-yl)-6-(2,4,6-trifluor-phenyl)-[1,2,4]triazolo[1,5-a]pyrimidin (WO 98/46608);
3,4-Dichlor-N-(2-cyanophenyl)-isothiazol-5-carbonsäureamid (WO 99/24413);
N-(2-{4-[3-(4-Chlor-phenyl)-prop-2-inyloxy]-3-methoxy-phenyl}-ethyl)-2-methansulfonyl-amino-3-methyl-butyramid, N-(2-{4-[3-(4-Chlor-phenyl)-prop-2-inyloxy]-3-methoxy-phenyl}-ethyl)-2-ethansulfonylamino-3-methyl-butyramid (WO 04/049804);
4-Difluormethyl-2-methyl-thiazol-5-carbonsäure-(4'-brom-biphenyl-2-yl)-amid, 4-Difluor-methyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid, 3-Difluormethyl-1-methyl-pyrazol-4-carbonsäure-(3',4'-dichlor-5-fluor-biphenyl-2-yl)-amid (WO 03/066609);
2-Butoxy-6-iodo-3-propyl-chromen-4-on (WO 03/14103);
3-[5-(4-Chlor-phenyl)-2,3-dimethyl-isoxazolidin-3-yl]-pyridin (EP-A 10 35 122);
Amisulbrom, 3-(3-Brom-6-fluor-2-methyl-indol-1-sulfonyl)-[1,2,4]triazol-1-sulfonsäure-dimethylamid (WO 03/053145);
3-(4-Chlor-phenyl)-3-(2-isopropoxycarbonylamino-3-methyl-butyrylamino)-propan-säuremethylester (EP-A 1028125).

Im Hinblick auf eine Senkung der Aufwandmengen und eine Verbreiterung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze, insbesondere für bestimmte

Indikationen, zeigen.

Demgemäss wurden die eingangs definierten Mischungen gefunden. Es wurde außerdem gefunden, dass sich bei gleichzeitiger gemeinsamer oder getrennter Anwendung der Verbindungen I und eines Wirkstoffs II oder bei Anwendung der Verbindungen I und eines Wirkstoffs II nacheinander Schadpilze besser bekämpfen lassen als mit den Einzelverbindungen (synergistische Mischungen). Die Verbindungen I lassen sich als Synergist für eine Vielzahl verschiedener Wirkstoffe verwenden. Durch gleichzeitige gemeinsame oder getrennte Anwendung der Verbindung I mit einem Wirkstoff I wird die fungizide Wirksamkeit in überadditivem Maße erhöht.

Die Mischungen der Verbindungen I und eines Wirkstoffs II, bzw. die gleichzeitige gemeinsame oder getrennte Verwendung der Verbindungen I und eines Wirkstoffs I zeichnen sich aus durch eine hervorragende Wirksamkeit gegen ein breites Spektrum von pflanzenpathogenen Pilzen, insbesondere aus der Klasse der *Ascomyceten, Deuteromyceten, Oomyceten* und *Basidiomyceten.* Sie sind zum Teil systemisch wirksam und können im Pflanzenschutz als Blatt-, Beiz- und Bodenfungizide eingesetzt werden.

Besondere Bedeutung haben sie für die Bekämpfung einer Vielzahl von Pilzen an verschiedenen Kulturpflanzen wie Bananen, Baumwolle, Gemüsepflanzen (z.B. Gurken, Bohnen und Kürbisse), Gerste, Gras, Hafer, Kaffee, Kartoffeln, Mais, Obstpflanzen, Reis, Roggen, Soja, Tomaten, Wein, Weizen, Zierpflanzen, Zuckerrohr und einer Vielzahl von Samen.

Vorteilhaft eignen sie sich zur Bekämpfung folgender Pflanzenkrankheiten:

- *Alternaria* Arten an Gemüse, Raps, Zuckerrüben und Obst und Reis , wie z.B. *A.solani* oder *A. alternata* an Kartoffeln und Tomaten,
- *Aphanomyces* Arten an Zuckerrüben und Gemüse,
- *Ascochyta-Arten* an Getreide and Gemüse,
- *Bipolaris-* und *Drechslera* Arten an Mais, Getreide, Reis und Rasen, wie z.B. *D.maydis* an Mais,
- *Blumeria graminis* (Echter Mehltau) an Getreide,
- *Botrytis cinerea* (Grauschimmel) an Erdbeeren, Gemüse, Blumen und Weinreben,
- *Bremia lactucae* an Salat,
- *Cercospora* Arten an Mais, Sojabohnen, Reis und Zuckerrüben,
- *Cochliobolus* Arten an Mais , Getreide, Reis, wie z.B. *Cochliobolus sativus* an Getreide, *Cochliobolus miyabeanus* an Reis,
- *Colletotricum* Arten an Sojabohnen und Baumwolle,
- *Drechslera* Arten, *Pyrenophora* Arten an Mais, Getreide, Reis und Rasen, wie z.B. *D.teres* an Gerste oder *D. tritici-repentis* an Weizen,
- *Esca* an Weinrebe, verursacht durch *Phaeoacremonium chlamydosporium, Ph. Aleophilum,* und *Formitipora punctata (syn. Phellinus punctatus),*
- *Exserohilum* Arten an Mais,
- *Erysiphe cichoracearum* und *Sphaerotheca fuliginea* an Gurkengewächsen,
- *Fusarium* und *Verticillium* Arten an verschiedenen Pflanzen wie z.B. *F. graminearum* oder *F. culmorum* an Getreide oder *F. oxysporum* an einer Vielzahl von Pflanzen wie z.B. Tomaten,
- *Gaeumanomyces graminis* an Getreide,
- *Gibberella* arten an Getreide und Reis (z.B. *Gibberella fujikuroi an* Reis),
- *Grainstaining complex* an Reis,
- *Helminthosporium* Arten an Mais und Reis,
- *Michrodochium nivale* an Getreide,
- *Mycosphaerella* Arten an Getreide, Bananen und Erdnüssen, wie z.B. *M. graminicola* an Weizen oder *M.fijiensis* an Bananen,
- *Peronospora-Arten* an Kohl und Zwiebelgewächsen, wie z.B. *P. brassicae* an Kohl oder *P. destructor* an Zwiebel,
- *Phakopsara pachyrhizi* und *Phakopsara meibomiae* an Sojabohnen,
- *Phomopsis* Arten an Sojabohnen und Sonnenblumen,
- *Phytophthora infestans* an Kartoffeln und Tomaten,
- *Phytophthora* Arten an verschiedenen Pflanzen wie z.B. *P.capsici* an Paprika,
- *Plasmopara viticola* an Weinreben,
- *Podosphaera leucotricha* an Apfel,
- *Pseudocercosporella herpotrichoides* an Getreide,
- *Pseudoperonospora* an verschiedenen Pflanzen wie z.B. *P. cubensis* an Gurke oder *P. humili an* Hopfen,
- *Puccinia* Arten an verschiedenen Pflanzen wie z.B. *P. triticina, P. striformins, P. hordei* oder *P.graminis* an Getreide, oder *P. asparagi* an Spargel,
- *Pyricularia oryzae, Corticium sasakii, Sarocladium oryzae, S.attenuatum, Entyloma oryzae, an Reis,*
- *Pyricularia grisea* an Rasen und Getreide,

- *Pythium spp. an Rasen, Reis, Mais, Baumwolle, Raps, Sonnenblumen, Zuckerrüben*, Gemüse und anderen Pflanzen wie z.B. *P.ultiumum* an verschiedenen Pflanzen, *P. aphanidermatum* an Rasen,
- *Rhizoctonia-Arten* an Baumwolle, Reis, Kartoffeln, Rasen, Mais, Raps, Kartoffeln, Zuckerrüben, Gemüse und an verschiedenen Pflanzen wie z.B. *R.solani* an Rüben und verschiedenen Pflanzen,
- *Rhynchosporium secalis* an Gerste, Roggen und Triticale,
- *Sclerotinia* Arten an Raps und Sonnenblumen,
- *Septoria tritici* und *Stagonospora nodorum* an Weizen,
- *Erysiphe (*syn. *Uncinula) necator* an Weinrebe,
- *Setospaeria Arten* an Mais und Rasen,
- *Sphacelotheca reilinia* an Mais,
- *Thievaliopsis* Arten an Sojabohnen und Baumwolle,
- *Tilletia Arten* an Getreide,
- *Ustilago-Arten* an Getreide, Mais und Zuckerrohr, wie z.B. *U. maydis* an Mais,
- *Venturia-Arten* (Schorf) an Äpfeln und Birnen wie. z.B. *V. inaequalis* an Apfel.

Die Mischungen der Verbindungen I und Wirkstoffen II eignen sich besonders zur Bekämpfung von Schadpilzen aus der Klasse der *Peronosporomycetes* (syn. *Oomyceten),* wie *Peronospora-Arten, Phytophthora*-Arten, *Plasmopara viticola* und *Pseudoperonospora*-Arten, insbesondere der entsprechenden voranstehend genannten.

Die Verbindungen I und Wirkstoffe II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Bei den in den vorstehenden Formeln angegebenen Definitionen der Symbole wurden Sammelbegriffe verwendet, die allgemein repräsentativ für die folgenden Substituenten stehen:

Halogen: Fluor, Chlor, Brom und Jod;

Alkyl: gesättigte, geradkettige oder verzweigte Kohlenwasserstoffreste mit 1 bis 4, 6, 8 oder 10 Kohlenstoffatomen, z.B. $C_1$-$C_6$-Alkyl wie Methyl, Ethyl, Propyl, 1-Methylethyl, Butyl, 1-Methyl-propyl, 2-Methylpropyl, 1,1-Dimethylethyl, Pentyl, 1-Methylbutyl, 2-Methylbutyl, 3-Methylbutyl, 2,2-Di-methylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl;

Halogenalkyl: geradkettige oder verzweigte Alkylgruppen mit 1 bis 2, 4 oder 6 Kohlenstoffatomen (wie vorstehend genannt), wobei in diesen Gruppen teilweise oder vollständig die Wasserstoffatome durch Halogenatome wie vorstehend genannt ersetzt sein können: insbesondere $C_1$-$C_2$-Halogenalkyl wie Chlormethyl, Brommethyl, Dichlormethyl, Trichlormethyl, Fluormethyl, Difluormethyl, Trifluormethyl, Chlorfluormethyl, Dichlorfluormethyl, Chlordifluormethyl, 1-Chlorethyl, 1-Bromethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl oder 1,1,1-Trifluorprop-2-yl;

Im Hinblick auf ihre bestimmungsgemäße Verwendung der Azolopyrimidinylamine der Formel I sind die folgenden Bedeutungen der Substituenten, und zwar jeweils für sich allein oder in Kombination, besonders bevorzugt:

Für die erfindungsgemäßen Mischungen kommen insbesondere Verbindungen der Formel I in Frage, in welchen $R^1$ geradkettiges oder verzweigtes $C_5$-$C_{12}$-Alkyl bedeutet.

Eine bevorzugte Ausgestaltung betrifft Verbindungen der Formel I, in der $R^1$ geradkettiges oder verzweigtes $C_5$-$C_{10}$-Alkyl, insbesondere 3,5,5-Trimethyl-hexyl, n-Heptyl, n-Octyl, n-Nonyl und n-Decyl bedeutet.

In einer besonders bevorzugten Ausführung der Verbindungen der Formel I steht $R^2$ für Methyl, Ethyl, n-Propyl, n-Octyl, Trifluormethyl oder Methoxymethyl, insbesondere Methyl, Ethyl, Trifluormethyl oder Methoxymethyl.

Weiterhin sind Verbindungen der Formel I bevorzugt, in denen $R^3$ Wasserstoff bedeutet.

In einer weiteren Ausführung der Verbindungen der Formel I steht $R^3$ für Amino.

In einer weiteren Ausgestaltung bevorzugter Verbindungen I weisen die Kohlenstoffketten von $R^1$ und $R^2$ gemeinsam nicht mehr als 12 Kohlenstoffatome auf.

Insbesondere sind im Hinblick auf ihre Verwendung die in den folgenden Tabellen zusammengestellten Verbindungen I bevorzugt. Die in den Tabellen für einen Substituenten genannten Gruppen stellen außerdem für sich betrachtet, unabhängig von der Kombination, in der sie genannt sind, eine besonders bevorzugte Ausgestaltung des

betreffenden Substituenten dar.

Tabelle 1

Verbindungen der Formel I, in denen die Kombination von $R^1$, $R^2$, und $R^3$ für eine Verbindung jeweils einer Zeile der Tabelle I entspricht

Tabelle I

| Nr. | $R^1$ | $R^2$ | $R^3$ |
|---|---|---|---|
| I-1# | $C_6H_5$ | $CH_3$ | H |
| I-2# | 2-Cl-$C_6H_4$ | $CH_3$ | H |
| I-3# | 3-Cl-$C_6H_4$ | $CH_3$ | H |
| I-4# | 4-Cl-$CH_4$ | $CH_3$ | H |
| I-5# | 2-F-$C_6H_4$ | $CH_3$ | H |
| I-6# | 3-F-$C_6H_4$ | $CH_3$ | H |
| I-7# | 4-F-$C_6H_4$ | $CH_3$ | H |
| I-8# | 2,4-$Cl_2$-$C_6H_3$ | $CH_3$ | H |
| I-9# | 3,4-$Cl_2$-$C_6H_3$ | $CH_3$ | H |
| I-10# | 2,4-$F_2$-$C_6H_3$ | $CH_3$ | H |
| I-11# | 3,4-$F_2$-$C_6H_3$ | $CH_3$ | H |
| I-12# | 4-$CH_3$-$C_6H_4$ | $CH_3$ | H |
| I-13# | 4-$CH_2CH_3$-$C_6H_4$ | $CH_3$ | H |
| I-14# | 4-$CH_2CH_2CH_3$-$C_6H_4$ | $CH_3$ | H |
| I-15# | 4-$CH(CH_3)_2$-$C_6H_4$ | $CH_3$ | H |
| I-16# | 4-$CH_2CH_2CH_2CH_3$-$C_6H_4$ | $CH_3$ | H |
| I-17# | 4-$C(CH_3)CH_2CH_3$-$C_6H_4$ | $CH_3$ | H |
| I-18# | 4-$C(CH_3)_3$-$C_6H_4$ | $CH_3$ | H |
| I-19# | $CH_2CH_2CH_2CH_3$ | $CH_3$ | H |
| I-20 | $CH_2CH_2CH_2CH_2CH_3$ | $CH_3$ | H |
| I-21 | $CH_2CH_2CH_2CH_2CH_2CH_3$ | $CH_3$ | H |
| I-22 | $CH_2CH(CH_3)CH_2CH_2CH_3$ | $CH_3$ | H |
| I-23 | $CH_2CH(CH_2CH_3)_2$ | $CH_3$ | H |
| I-24 | $CH_2CH_2CH_2CH_2CH_2CH_2CH_3$ | $CH_3$ | H |
| I-25 | $CH_2CH_2CH_2CH_2CH_2CH_2CH_2CH_3$ | $CH_3$ | H |
| I-26 | $CH_2CH_2CH_2CH_2CH_2CH_2CH_2CH_2CH_3$ | $CH_3$ | H |
| I-27 | $CH_2CH_2CH_2CH_2CH_2CH_2CH_2CH_2CH_2CH_3$ | $CH_3$ | H |
| I-28 | $CH_2CH_2CH(CH_3)CH_2CH(CH_3)_3$ | $CH_3$ | H |
| I-29# | $CH_2CH_2CH_2CH_3$ | $CH_3$ | $NH_2$ |
| I-30 | $CH_2CH_2CH_2CH_2CH_3$ | $CH_3$ | $NH_2$ |
| I-31 | $CH_2CH_2CH_2CH_2CH_2CH_3$ | $CH_3$ | $NH_2$ |
| I-32 | $CH_2CH(CH_3)CH_2CH_2CH_3$ | $CH_3$ | $NH_2$ |
| I-33 | $CH_2CH(CH_2CH_3)_2$ | $CH_3$ | $NH_2$ |

(fortgesetzt)

| Nr. | $R^1$ | $R^2$ | $R^3$ |
|---|---|---|---|
| I-34 | $CH_2CH_2CH_2CH_2CH_2CH_2CH_3$ | $CH_3$ | $NH_2$ |
| I-35 | $CH_2CH_2CH_2CH_2CH_2CH_2CH_2CH_3$ | $CH_3$ | $NH_2$ |
| I-36 | $CH_2CH_2CH_2CH_2CH_2CH_2CH_2CH_2CH_3$ | $CH_3$ | $NH_2$ |
| I-37 | $CH_2CH_2CH_2CH_2CH_2CH_2CH_2CH_2CH_2CH_3$ | $CH_3$ | $NH_2$ |
| I-38 | $CH_2CH_2CH(CH_3)CH_2CH(CH_3)_3$ | $CH_3$ | $NH_2$ |
| I-39# | $CH_2CH_2CH_2CH_3$ | $CH_3$ | $CH_3$ |
| I-40# | $CH_2CH_2CH_2CH_2CH_3$ | $CH_3$ | $CH_3$ |
| I-41# | $CH_2CH_2CH_2CH_2CH_2CH_3$ | $CH_3$ | $CH_3$ |
| I-42# | $CH_2CH(CH_3)CH_2CH_2CH_3$ | $CH_3$ | $CH_3$ |
| I-43# | $CH_2CH(CH_2CH_3)_2$ | $CH_3$ | $CH_3$ |
| I-44# | $CH_2CH_2CH_2CH_2CH_2CH_2CH_3$ | $CH_3$ | $CH_3$ |
| I-45# | $CH_2CH_2CH_2CH_2CH_2CH_2CH_2CH_3$ | $CH_3$ | $CH_3$ |
| I-46# | $CH_2CH_2CH_2CH_2CH_2CH_2CH_2CH_2CH_3$ | $CH_3$ | $CH_3$ |
| I-47# | $CH_2CH_2CH_2CH_2CH_2CH_2CH_2CH_2CH_2CH_3$ | $CH_3$ | $CH_3$ |
| I-48# | $CH_2CH_2CH(CH_3)CH_2CH(CH_3)_3$ | $CH_3$ | $CH_3$ |
| I-49# | $(CH_2)_3$-O-$CH_3$ | $CH_3$ | H |
| I-50# | $(CH_2)_3$-O-$CH_2CH_3$ | $CH_3$ | H |
| I-51# | $(CH_2)_3$-O-$CH_2CH_2CH_3$ | $CH_3$ | H |
| I-52# | $(CH_2)_3$-O-$CH_2CH_2CH_2CH_3$ | $CH_3$ | H |
| I-53# | $(CH_2)_3$-O-$CH_2CH_2CH_2CH_2CH_3$ | $CH_3$ | H |
| I-54# | $(CH_2)_3$-O-$CH_2CH_2CH_2CH_2CH_2CH_3$ | $CH_3$ | H |
| I-55# | $(CH_2)_3$-O-$CH_2CH_2CH_2CH_2CH_2CH_2CH_3$ | $CH_3$ | H |
| I-56# | $(CH_2)_3$-O-$CH_2CH_2CH_2CH_2CH_2CH_2CH_2CH_3$ | $CH_3$ | H |
| I-57# | $(CH_2)_3$-O-$CH_2CH_2CH_2CH_2CH_2CH_2CH_2CH_2CH_3$ | $CH_3$ | H |
| I-58# | $(CH_2)_3$-O-$CH(CH_3)_2$ | $CH_3$ | H |
| I-59# | $(CH_2)_3$-O-$C(CH_3)_3$ | $CH_3$ | H |
| I-60# | $(CH_2)_3$-O-$CH_2C(CH_3)_3$ | $CH_3$ | H |
| I-61# | $(CH_2)_3$-O-$CH(CH_3)CH_2C(CH_3)_3$ | $CH_3$ | H |
| I-62# | $(CH_2)_3$-O-$CH(CH_2CH_3)CH_2C(CH_3)_3$ | $CH_3$ | H |
| I-63# | $(CH_2)_3$-O-$CH_2CH(CH_3)CH_2CH(CH_3)_2$ | $CH_3$ | H |
| I-64# | $(CH_2)_3$-O-$CH_2CH(CH_2CH_3)CH_2CH_2CH_3$ | $CH_3$ | H |
| I-65# | $(CH_2)_3$-O-$CH_2CH_2CH(CH_3)CH_2CH(CH_3)_2$ | $CH_3$ | H |
| I-66# | $(CH_2)_3$-O-$CH_2CH_2CH(CH_3)CH_2C(CH_3)_3$ | $CH_3$ | H |
| I-67# | $(CH_2)_3$-O-$CH_2CH_2CH(CH_3)CH_2CH_2CH(CH_3)_2$ | $CH_3$ | H |
| I-68# | $(CH_2)_3$-O-$CH_2CH_2CH(CH_3)CH_2CH_2CH_2CH(CH_3)_2$ | $CH_3$ | H |
| I-69# | $(CH_2)_3$-O-$CH_3$ | $CH_3$ | $CH_3$ |
| I-70# | $(CH_2)_3$-O-$CH_2CH_3$ | $CH_3$ | $CH_3$ |
| I-71# | $(CH_2)_3$-O-$CH_2CH_2CH_3$ | $CH_3$ | $CH_3$ |

(fortgesetzt)

| Nr. | $R^1$ | $R^2$ | $R^3$ |
|---|---|---|---|
| I-72# | $(CH_2)_3$-O-$CH_2CH_2CH_2CH_3$ | $CH_3$ | $CH_3$ |
| I-73# | $(CH_2)_3$-O-$CH_2CH_2CH_2CH_2CH_3$ | $CH_3$ | $CH_3$ |
| I-74# | $(CH_2)_3$-O-$CH_2CH_2CH_2CH_2CH_2CH_3$ | $CH_3$ | $CH_3$ |
| I-75# | $(CH_2)_3$-O-$CH_2CH_2CH_2CH_2CH_2CH_2CH_3$ | $CH_3$ | $CH_3$ |
| I-76# | $(CH_2)_3$-O-$CH_2CH_2CH_2CH_2CH_2CH_2CH_2CH_3$ | $CH_3$ | $CH_3$ |
| I-77# | $(CH_2)_3$-O-$CH_2CH_2CH_2CH_2CH_2CH_2CH_2CH_2CH_3$ | $CH_3$ | $CH_3$ |
| I-78# | $(CH_2)_3$-O-$CH(CH_3)_2$ | $CH_3$ | $CH_3$ |
| I-79# | $(CH_2)_3$-O-$C(CH_3)_3$ | $CH_3$ | $CH_3$ |
| I-80# | $(CH_2)_3$-O-$CH_2C(CH_3)_3$ | $CH_3$ | $CH_3$ |
| I-81# | $(CH_2)_3$-O-$CH(CH_3)CH_2C(CH_3)_3$ | $CH_3$ | $CH_3$ |
| I-82# | $(CH_2)_3$-O-$CH(CH_2CH_3)CH_2C(CH_3)_3$ | $CH_3$ | $CH_3$ |
| I-83# | $(CH_2)_3$-O-$CH_2CH(CH_3)CH_2CH(CH_3)_2$ | $CH_3$ | $CH_3$ |
| I-84# | $(CH_2)_3$-O-$CH_2CH(CH_2CH_3)CH_2CH_2CH_3$ | $CH_3$ | $CH_3$ |
| I-85# | $(CH_2)_3$-O-$CH_2CH_2CH(CH_3)CH_2CH(CH_3)_2$ | $CH_3$ | $CH_3$ |
| I-86# | $(CH_2)_3$-O-$CH_2CH_2CH(CH_3)CH_2C(CH_3)_3$ | $CH_3$ | $CH_3$ |
| I-87# | $(CH_2)_3$-O-$CH_2CH_2CH(CH_3)CH_2CH_2CH(CH_3)_2$ | $CH_3$ | $CH_3$ |
| I-88# | $(CH_2)_3$-O-$CH_2CH_2CH(CH_3)CH_2CH_2CH_2CH(CH_3)_2$ | $CH_3$ | $CH_3$ |
| I-89# | $CH_2$-$C_6H_5$ | $CF_3$ | H |
| I-90# | $CH_2$-(4-Cl-$C_6H_4$) | $CF_3$ | H |
| I-91# | $CH_2CH_2CH_3$ | $CF_3$ | H |
| I-92# | $CH_2CH_2CH_2CH_3$ | $CF_3$ | H |
| I-93 | $CH_2CH_2CH_2CH_2CH_3$ | $CF_3$ | H |
| I-94 | $CH_2CH_2CH_2CH_2CH_2CH_3$ | $CF_3$ | H |
| I-95 | $CH_2CH(CH_3)CH_2CH_2CH_3$ | $CF_3$ | H |
| I-96 | $CH_2CH(CH_2CH_3)_2$ | $CF_3$ | H |
| I-97 | $CH_2CH_2CH_2CH_2CH_2CH_2CH_3$ | $CF_3$ | H |
| I-98 | $CH_2CH_2CH_2CH_2CH_2CH_2CH_2CH_3$ | $CF_3$ | H |
| I-99 | $CH_2CH_2CH_2CH_2CH_2CH_2CH_2CH_2CH_3$ | $CF_3$ | H |
| I-100 | $CH_2CH_2CH_2CH_2CH_2CH_2CH_2CH_2CH_2CH_3$ | $CF_3$ | H |
| I-101 | $CH_2CH_2CH(CH_3)CH_2CH(CH_3)_3$ | $CF_3$ | H |
| I-102# | cyclo-$C_5H_9$ | $CF_3$ | H |
| I-103# | cyclo-$C_6H_{11}$ | $CF_3$ | H |
| I-104# | $CH_2CH_2CH_2CH_3$ | $CH_2CH_3$ | H |
| I-105 | $CH_2CH_2CH_2CH_2CH_3$ | $CH_2CH_3$ | H |
| I-106 | $CH_2CH_2CH_2CH_2CH_2CH_3$ | $CH_2CH_3$ | H |
| I-107 | $CH_2CH(CH_3)CH_2CH_2CH_3$ | $CH_2CH_3$ | H |
| I-108 | $CH_2CH(CH_2CH_3)_2$ | $CH_2CH_3$ | H |
| I-109 | $CH_2CH_2CH_2CH_2CH_2CH_2CH_3$ | $CH_2CH_3$ | H |

(fortgesetzt)

| Nr. | $R^1$ | $R^2$ | $R^3$ |
|---|---|---|---|
| I-110 | $CH_2CH_2CH_2CH_2CH_2CH_2CH_2CH_3$ | $CH_2CH_3$ | H |
| I-111 | $CH_2CH_2CH_2CH_2CH_2CH_2CH_2CH_2CH_3$ | $CH_2CH_3$ | H |
| I-112 | $CH_2CH_2CH_2CH_2CH_2CH_2CH_2CH_2CH_2CH_3$ | $CH_2CH_3$ | H |
| I-113 | $CH_2CH_2CH(CH_3)CH_2CH(CH_3)_3$ | $CH_2CH_3$ | H |
| I-114# | $CH_2CH_2CH_2CH_3$ | $CH_2CH_3$ | $NH_2$ |
| I-115 | $CH_2CH_2CH_2CH_2CH_3$ | $CH_2CH_3$ | $NH_2$ |
| I-116 | $CH_2CH_2CH_2CH_2CH_2CH_3$ | $CH_2CH_3$ | $NH_2$ |
| I-117 | $CH_2CH(CH_3)CH_2CH_2CH_3$ | $CH_2CH_3$ | $NH_2$ |
| I-118 | $CH_2CH(CH_2CH_3)_2$ | $CH_2CH_3$ | $NH_2$ |
| I-119 | $CH_2CH_2CH_2CH_2CH_2CH_2CH_3$ | $CH_2CH_3$ | $NH_2$ |
| I-120 | $CH_2CH_2CH_2CH_2CH_2CH_2CH_2CH_3$ | $CH_2CH_3$ | $NH_2$ |
| I-121 | $CH_2CH_2CH_2CH_2CH_2CH_2CH_2CH_2CH_3$ | $CH_2CH_3$ | $NH_2$ |
| I-122 | $CH_2CH_2CH_2CH_2CH_2CH_2CH_2CH_2CH_2CH_3$ | $CH_2CH_3$ | $NH_2$ |
| I-123 | $CH_2CH_2CH(CH_3)CH_2CH(CH_3)_3$ | $CH_2CH_3$ | $NH_2$ |
| I-124# | $CH_2CH_2CH_2CH_3$ | $CH_2CH_3$ | $CH_3$ |
| I-125# | $CH_2CH_2CH_2CH_2CH_3$ | $CH_2CH_3$ | $CH_3$ |
| I-126# | $CH_2CH_2CH_2CH_2CH_2CH_3$ | $CH_2CH_3$ | $CH_3$ |
| I-127# | $CH_2CH(CH_3)CH_2CH_2CH_3$ | $CH_2CH_3$ | $CH_3$ |
| I-128# | $CH_2CH(CH_2CH_3)_2$ | $CH_2CH_3$ | $CH_3$ |
| I-129# | $CH_2CH_2CH_2CH_2CH_2CH_2CH_3$ | $CH_2CH_3$ | $CH_3$ |
| I-130# | $CH_2CH_2CH_2CH_2CH_2CH_2CH_2CH_3$ | $CH_2CH_3$ | $CH_3$ |
| I-131# | $CH_2CH_2CH_2CH_2CH_2CH_2CH_2CH_2CH_3$ | $CH_2CH_3$ | $CH_3$ |
| I-132# | $CH_2CH_2CH_2CH_2CH_2CH_2CH_2CH_2CH_2CH_3$ | $CH_2CH_3$ | $CH_3$ |
| I-133# | $CH_2CH_2CH(CH_3)CH_2CH(CH_3)_3$ | $CH_2CH_3$ | $CH_3$ |
| I-134# | $(ch_2)_3$-O-$CH_3$ | $CH_2CH_3$ | H |
| I-135# | $(CH_2)_3$-O-$CH_2CH_3$ | $CH_2CH_3$ | H |
| I-136# | $(CH_2)_3$-O-$CH_2CH_2CH_3$ | $CH_2CH_3$ | H |
| I-137# | $(CH_2)_3$-O-$CH_2CH_2CH_2CH_3$ | $CH_2CH_3$ | H |
| I-138# | $(CH_2)_3$-O-$CH_2CH_2CH_2CH_2CH_3$ | $CH_2CH_3$ | H |
| I-139# | $(CH_2)_3$-O-$CH_2CH_2CH_2CH_2CH_2CH_3$ | $CH_2CH_3$ | H |
| I-140# | $(CH_2)_3$-O-$CH_2CH_2CH_2CH_2CH_2CH_2CH_3$ | $CH_2CH_3$ | H |
| I-141# | $(CH_2)_3$-O-$CH_2CH_2CH_2CH_2CH_2CH_2CH_2CH_3$ | $CH_2CH_3$ | H |
| I-142# | $(CH_2)_3$-O-$CH_2CH_2CH_2CH_2CH_2CH_2CH_2CH_2CH_3$ | $CH_2CH_3$ | H |
| I-143# | $(CH_2)_3$-O-$CH(CH_3)_2$ | $CH_2CH_3$ | H |
| I-144# | $(CH_2)_3$-O-$C(CH_3)_3$ | $CH_2CH_3$ | H |
| I-145# | $(CH_2)_3$-O-$CH_2C(CH_3)_3$ | $CH_2CH_3$ | H |
| I-146# | $(CH_2)_3$-O-$CH(CH_3)CH_2C(CH_3)_3$ | $CH_2CH_3$ | H |
| I-147# | $(CH_2)_3$-O-$CH(CH_2CH_3)CH_2C(CH_3)_3$ | $CH_2CH_3$ | H |

(fortgesetzt)

| Nr. | $R^1$ | $R^2$ | $R^3$ |
|---|---|---|---|
| I-148# | $(CH_2)_3$-O-$CH_2CH(CH_3)CH_2CH(CH_3)_2$ | $CH_2CH_3$ | H |
| I-149# | $(CH_2)_3$-O-$CH_2CH(CH_2CH_3)CH_2CH_2CH_3$ | $CH_2CH_3$ | H |
| I-150# | $(CH_2)_3$-O-$CH_2CH_2CH(CH_3)CH_2CH(CH_3)_2$ | $CH_2CH_3$ | H |
| I-151# | $(CH_2)_3$-O-$CH_2CH_2CH(CH_3)CH_2C(CH_3)_3$ | $CH_2CH_3$ | H |
| I-152# | $(CH_2)_3$-O-$CH_2CH_2CH(CH_3)CH_2CH_2CH(CH_3)_2$ | $CH_2CH_3$ | H |
| I-153# | $(CH_2)_3$-O-$CH_2CH_2CH(CH_3)CH_2CH_2CH_2CH(CH_3)_2$ | $CH_2CH_3$ | H |
| I-154# | $(CH_2)_3$-O-$CH_3$ | $CH_2CH_3$ | $CH_3$ |
| I-155# | $(CH_2)_3$-O-$CH_2CH_3$ | $CH_2CH_3$ | $CH_3$ |
| I-156# | $(CH_2)_3$-O-$CH_2CH_2CH_3$ | $CH_2CH_3$ | $CH_3$ |
| I-157# | $(CH_2)_3$-O-$CH_2CH_2CH_2CH_3$ | $CH_2CH_3$ | $CH_3$ |
| I-158# | $(CH_2)_3$-O-$CH_2CH_2CH_2CH_2CH_3$ | $CH_2CH_3$ | $CH_3$ |
| I-159# | $(CH_2)_3$-O-$CH_2CH_2CH_2CH_2CH_2CH_3$ | $CH_2CH_3$ | $CH_3$ |
| I-160# | $(CH_2)_3$-O-$CH_2CH_2CH_2CH_2CH_2CH_2CH_3$ | $CH_2CH_3$ | $CH_3$ |
| I-161# | $(CH_2)_3$-O-$CH_2CH_2CH_2CH_2CH_2CH_2CH_2CH_3$ | $CH_2CH_3$ | $CH_3$ |
| I-162# | $(CH_2)_3$-O-$CH_2CH_2CH_2CH_2CH_2CH_2CH_2CH_2CH_3$ | $CH_2CH_3$ | $CH_3$ |
| I-163# | $(CH_2)_3$-O-$CH(CH_3)_2$ | $CH_2CH_3$ | $CH_3$ |
| I-164# | $(CH_2)_3$-O-$C(CH_3)_3$ | $CH_2CH_3$ | $CH_3$ |
| I-165# | $(CH_2)_3$-O-$CH_2C(CH_3)_3$ | $CH_2CH_3$ | $CH_3$ |
| I-166# | $(CH_2)_3$-O-$CH(CH_3)CH_2C(CH_3)_3$ | $CH_2CH_3$ | $CH_3$ |
| I-167# | $(CH_2)_3$-O-$CH(CH_2CH_3)CH_2C(CH_3)_3$ | $CH_2CH_3$ | $CH_3$ |
| I-168# | $(CH_2)_3$-O-$CH_2CH(CH_3)CH_2CH(CH_3)_2$ | $CH_2CH_3$ | $CH_3$ |
| I-169# | $(CH_2)_3$-O-$CH_2CH(CH_2CH_3)CH_2CH_2CH_3$ | $CH_2CH_3$ | $CH_3$ |
| I-170# | $(CH_2)_3$-O-$CH_2CH_2CH(CH_3)CH_2CH(CH_3)_2$ | $CH_2CH_3$ | $CH_3$ |
| I-171# | $(CH_2)_3$-O-$CH_2CH_2CH(CH_3)CH_2C(CH_3)_3$ | $CH_2CH_3$ | $CH_3$ |
| I-172# | $(CH_2)_3$-O-$CH_2CH_2CH(CH_3)CH_2CH_2CH(CH_3)_2$ | $CH_2CH_3$ | $CH_3$ |
| I-173# | $(CH_2)_3$-O-$CH_2CH_2CH(CH_3)CH_2CH_2CH_2CH(CH_3)_2$ | $CH_2CH_3$ | $CH_3$ |
| I-174# | $CH_2CH_2CH_2CH_3$ | $CH_2CH_2CH_3$ | H |
| I-175 | $CH_2CH_2CH_2CH_2CH_3$ | $CH_2CH_2CH_3$ | H |
| I-176 | $CH_2CH_2CH_2CH_2CH_2CH_3$ | $CH_2CH_2CH_3$ | H |
| I-177 | $CH_2CH(CH_3)CH_2CH_2CH_3$ | $CH_2CH_2CH_3$ | H |
| I-178 | $CH_2CH(CH_2CH_3)_2$ | $CH_2CH_2CH_3$ | H |
| I-179 | $CH_2CH_2CH_2CH_2CH_2CH_2CH_3$ | $CH_2CH_2CH_3$ | H |
| I-180 | $CH_2CH_2CH_2CH_2CH_2CH_2CH_2CH_3$ | $CH_2CH_2CH_3$ | H |
| I-181 | $CH_2CH_2CH_2CH_2CH_2CH_2CH_2CH_2CH_3$ | $CH_2CH_2CH_3$ | H |
| I-182 | $CH_2CH_2CH_2CH_2CH_2CH_2CH_2CH_2CH_2CH_3$ | $CH_2CH_2CH_3$ | H |
| I-183 | $CH_2CH_2CH(CHs)CH_2CH(CH_3)_3$ | $CH_2CH_2CH_3$ | H |
| I-184# | $CH_2$-O-$CH_2CH_2CH_2CH_3$ | $CH_2CH_2CH_3$ | H |
| I-185# | $CH_2$-O-$CH_2CH_2CH_2CH_2CH_3$ | $CH_2CH_2CH_3$ | H |

(fortgesetzt)

| Nr. | $R^1$ | $R^2$ | $R^3$ |
|---|---|---|---|
| I-186# | $CH_2$-O-$CH_2CH_2CH_2CH_2CH_2CH_3$ | $CH_2CH_2CH_3$ | H |
| I-187# | $CH_2$-O-$CH_2CH_2CH_2CH_2CH_2CH_2CH_3$ | $CH_2CH_2CH_3$ | H |
| I-188# | $CH_2$-O-$CH_2CH_2CH_2CH_2CH_2CH_2CH_2CH_3$ | $CH_2CH_2CH_3$ | H |
| I-189# | $CH_2$-O-$CH_2CH_2CH_2CH_2CH_2CH_2CH_2CH_2CH_3$ | $CH_2CH_2CH_3$ | H |
| I-190# | $CH_2$-O-$C(CH_3)_3$ | $CH_2CH_2CH_3$ | H |
| I-191# | $CH_2$-O-$CH_2C(CH_3)_3$ | $CH_2CH_2CH_3$ | H |
| I-192# | $CH_2$-O-$CH(CH_3)CH_2C(CH_3)_3$ | $CH_2CH_2CH_3$ | H |
| I-193# | $CH_2$-O-$CH(CH_2CH_3)CH_2C(CH_3)_3$ | $CH_2CH_2CH_3$ | H |
| I-194# | $CH_2$-O-$CH_2CH(CH_3)CH_2CH(CH_3)_2$ | $CH_2CH_2CH_3$ | H |
| I-195# | $CH_2$-O-$CH_2CH(CH_2CH_3)CH_2CH_2CH_3$ | $CH_2CH_2CH_3$ | H |
| I-196# | $CH_2$-O-$CH_2CH_2CH(CH_3)CH_2CH(CH_3)_2$ | $CH_2CH_2CH_3$ | H |
| I-197# | $CH_2$-O-$CH_2CH_2CH(CH_3)CH_2C(CH_3)_3$ | $CH_2CH_2CH_3$ | H |
| I-198# | $CH_2$-O-$CH_2CH_2CH(CH_3)CH_2CH_2CH(CH_3)_2$ | $CH_2CH_2CH_3$ | H |
| I-199# | $CH_2$-O-$CH_2CH_2CH(CH_3)CH_2CH_2CH_2CH(CH_3)_2$ | $CH_2CH_2CH_3$ | H |
| I-200# | $(CH_2)_2$-O-$CH_2CH_2CH_3$ | $CH_2CH_2CH_3$ | H |
| I-201# | $(CH_2)_2$-O-$CH_2CH_2CH_2CH_3$ | $CH_2CH_2CH_3$ | H |
| I-202# | $(CH_2)_2$-O-$CH_2CH_2CH_2CH_2CH_3$ | $CH_2CH_2CH_3$ | H |
| I-203# | $(CH_2)_2$-O-$CH_2CH_2CH_2CH_2CH_2CH_3$ | $CH_2CH_2CH_3$ | H |
| I-204# | $(CH_2)_2$-O-$CH_2CH_2CH_2CH_2CH_2CH_2CH_3$ | $CH_2CH_2CH_3$ | H |
| I-205# | $(CH_2)_2$-O-$CH_2CH_2CH_2CH_2CH_2CH_2CH_2CH_3$ | $CH_2CH_2CH_3$ | H |
| I-206# | $(CH_2)_2$-O-$CH_2CH_2CH_2CH_2CH_2CH_2CH_2CH_2CH_3$ | $CH_2CH_2CH_3$ | H |
| I-207# | $(CH_2)_2$-O-$CH(CH_3)_2$ | $CH_2CH_2CH_3$ | H |
| I-208# | $(CH_2)_2$-O-$C(CH_3)_3$ | $CH_2CH_2CH_3$ | H |
| I-209# | $(CH_2)_2$-O-$CH_2C(CH_3)_3$ | $CH_2CH_2CH_3$ | H |
| I-210# | $(CH_2)_2$-O-$CH(CH_3)CH_2C(CH_3)_3$ | $CH_2CH_2CH_3$ | H |
| I-211# | $(CH_2)_2$-O-$CH(CH_2CH_3)CH_2C(CH_3)_3$ | $CH_2CH_2CH_3$ | H |
| I-212# | $(CH_2)_2$-O-$CH_2CH(CH_3)CH_2CH(CH_3)_2$ | $CH_2CH_2CH_3$ | H |
| I-213# | $(CH_2)_2$-O-$CH_2CH(CH_2CH_3)CH_2CH_2CH_3$ | $CH_2CH_2CH_3$ | H |
| I-214# | $(CH_2)_2$-O-$CH_2CH_2CH(CH_3)CH_2CH(CH_3)_2$ | $CH_2CH_2CH_3$ | H |
| I-215# | $(CH_2)_2$-O-$CH_2CH_2CH(CH_3)CH_2C(CH_3)_3$ | $CH_2CH_2CH_3$ | H |
| I-216# | $(CH_2)_2$-O-$CH_2CH_2CH(CH_3)CH_2CH_2CH(CH_3)_2$ | $CH_2CH_2CH_3$ | H |
| I-217# | $(CH_2)_2$-O-$CH_2CH_2CH(CH_3)CH_2CH_2CH_2CH(CH_3)_2$ | $CH_2CH_2CH_3$ | H |
| I-218# | $(CH_2)_3$-O-$CH_3$ | $CH_2CH_2CH_3$ | H |
| I-219# | $(CH_2)_3$-O-$CH_2CH_3$ | $CH_2CH_2CH_3$ | H |
| I-220# | $(CH_2)_3$-O-$CH_2CH_2CH_3$ | $CH_2CH_2CH_3$ | H |
| I-221# | $(CH_2)_3$-O-$CH_2CH_2CH_2CH_3$ | $CH_2CH_2CH_3$ | H |
| I-222# | $(CH_2)_3$-O-$CH_2CH_2CH_2CH_2CH_3$ | $CH_2CH_2CH_3$ | H |
| I-223# | $(CH_2)_3$-O-$CH_2CH_2CH_2CH_2CH_2CH_3$ | $CH_2CH_2CH_3$ | H |

(fortgesetzt)

| Nr. | $R^1$ | $R^2$ | $R^3$ |
|---|---|---|---|
| I-224# | $(CH_2)_3$-O-$CH_2CH_2CH_2CH_2CH_2CH_2CH_3$ | $CH_2CH_2CH_3$ | H |
| I-225# | $(CH_2)_3$-O-$CH_2CH_2CH_2CH_2CH_2CH_2CH_2CH_3$ | $CH_2CH_2CH_3$ | H |
| I-226# | $(CH_2)_3$-O-$CH_2CH_2CH_2CH_2CH_2CH_2CH_2CH_2CH_3$ | $CH_2CH_2CH_3$ | H |
| I-227# | $(CH_2)_3$-O-$CH(CH_3)_2$ | $CH_2CH_2CH_3$ | H |
| I-228# | $(CH_2)_3$-O-$C(CH_3)_3$ | $CH_2CH_2CH_3$ | H |
| I-229# | $(CH_2)_3$-O-$CH_2C(CH_3)_3$ | $CH_2CH_2CH_3$ | H |
| I-230# | $(CH_2)_3$-O-$CH(CH_3)CH_2C(CH_3)_3$ | $CH_2CH_2CH_3$ | H |
| I-231# | $(CH_2)_3$-O-$CH(CH_2CH_3)CH_2C(CH_3)_3$ | $CH_2CH_2CH_3$ | H |
| I-232# | $(CH_2)_3$-O-$CH_2CH(CH_3)CH_2CH(CH_3)_2$ | $CH_2CH_2CH_3$ | H |
| I-233# | $(CH_2)_3$-O-$CH_2CH(CH_2CH_3)CH_2CH_2CH_3$ | $CH_2CH_2CH_3$ | H |
| I-234# | $(CH_2)_3$-O-$CH_2CH_2CH(CH_3)CH_2CH(CH_3)_2$ | $CH_2CH_2CH_3$ | H |
| I-235# | $(CH_2)_3$-O-$CH_2CH_2CH(CH_3)CH_2C(CH_3)_3$ | $CH_2CH_2CH_3$ | H |
| I-236# | $(CH_2)_3$-O-$CH_2CH_2CH(CH_3)CH_2CH_2CH(CH_3)_2$ | $CH_2CH_2CH_3$ | H |
| I-237# | $(CH_2)_3$-O-$CH_2CH_2CH(CH_3)CH_2CH_2CH_2CH(CH_3)_2$ | $CH_2CH_2CH_3$ | H |
| I-238# | $CH_2CH_2CH_3$ | $CH_2OCH_3$ | H |
| I-239# | $CH_2CH_2CH_2CH_3$ | $CH_2OCH_3$ | H |
| I-240 | $CH_2CH_2CH_2CH_2CH_3$ | $CH_2OCH_3$ | H |
| I-241 | $CH_2CH_2CH_2CH_2CH_2CH_3$ | $CH_2OCH_3$ | H |
| I-242 | $CH_2CH(CH_3)CH_2CH_2CH_3$ | $CH_2OCH_3$ | H |
| I-243 | $CH_2CH(CH_2CH_3)_2$ | $CH_2OCH_3$ | H |
| I-244 | $CH_2CH_2CH_2CH_2CH_2CH_2CH_3$ | $CH_2OCH_3$ | H |
| I-245 | $CH_2CH_2CH_2CH_2CH_2CH_2CH_2CH_3$ | $CH_2OCH_3$ | H |
| I-246 | $CH_2CH_2CH_2CH_2CH_2CH_2CH_2CH_2CH_3$ | $CH_2OCH_3$ | H |
| I-247 | $CH_2CH_2CH_2CH_2CH_2CH_2CH_2CH_2CH_2CH_3$ | $CH_2OCH_3$ | H |
| I-248 | $CH_2CH_2CH(CH_3)CH_2CH(CH_3)_3$ | $CH_2OCH_3$ | H |
| I-249# | $(CH_2)_3$-O-$CH_3$ | $CH_2OCH_3$ | H |
| I-250# | $(CH_2)_3$-O-$CH_2CH_3$ | $CH_2OCH_3$ | H |
| I-251# | $(CH_2)_3$-O-$CH_2CH_2CH_3$ | $CH_2OCH_3$ | H |
| I-252# | $(CH_2)_3$-O-$CH_2CH_2CH_2CH_3$ | $CH_2OCH_3$ | H |
| I-253# | $(CH_2)_3$-O-$CH_2CH_2CH_2CH_2CH_3$ | $CH_2OCH_3$ | H |
| I-254# | $(CH_2)_3$-O-$CH_2CH_2CH_2CH_2CH_2CH_3$ | $CH_2OCH_3$ | H |
| I-255# | $(CH_2)_3$-O-$CH_2CH_2CH_2CH_2CH_2CH_2CH_3$ | $CH_2OCH_3$ | H |
| I-256# | $(CH_2)_3$-O-$CH_2CH_2CH_2CH_2CH_2CH_2CH_2CH_3$ | $CH_2OCH_3$ | H |
| I-257# | $(CH_2)_3$-O-$CH_2CH_2CH_2CH_2CH_2CH_2CH_2CH_2CH_3$ | $CH_2OCH_3$ | H |
| I-258# | $(CH_2)_3$-O-$CH(CH_3)_2$ | $CH_2OCH_3$ | H |
| I-259# | $(CH_2)_3$-O-$C(CH_3)_3$ | $CH_2OCH_3$ | H |
| I-260# | $(CH_2)_3$-O-$CH_2C(CH_3)_3$ | $CH_2OCH_3$ | H |
| I-261# | $(CH_2)_3$-O-$CH(CH_3)CH_2C(CH_3)_3$ | $CH_2OCH_3$ | H |

(fortgesetzt)

| Nr. | $R^1$ | $R^2$ | $R^3$ |
|---|---|---|---|
| I-262# | $(CH_2)_3$-O-$CH(CH_2CH_3)CH_2C(CH_3)_3$ | $CH_2OCH_3$ | H |
| I-263# | $(CH_2)_3$-O-$CH_2CH(CH_3)CH_2CH(CH_3)_2$ | $CH_2OCH_3$ | H |
| I-264# | $(CH_2)_3$-O-$CH_2CH(CH_2CH_3)CH_2CH_2CH_3$ | $CH_2OCH_3$ | H |
| I-265# | $(CH_2)_3$-O-$CH_2CH_2CH(CH_3)CH_2CH(CH_3)_2$ | $CH_2OCH_3$ | H |
| I-266# | $(CH_2)_3$-O-$CH_2CH_2CH(CH_3)CH_2C(CH_3)_3$ | $CH_2OCH_3$ | H |
| I-267# | $(CH_2)_3$-O-$CH_2CH_2CH(CH_3)CH_2CH_2CH(CH_3)_2$ | $CH_2OCH_3$ | H |
| I-268# | $(CH_2)_3$-O-$CH_2CH_2CH(CH_3)CH_2CH_2CH_2CH(CH_3)_2$ | $CH_2OCH_3$ | H |
| I-269# | $CH_3$ | $(CH_2)_3CH_3$ | H |
| I-270# | $CH_2CH_3$ | $(CH_2)_3CH_3$ | H |
| I-271# | $CH_2CH_2CH_3$ | $(CH_2)_3CH_3$ | H |
| I-272# | $CH_2CH_2CH_2CH_3$ | $(CH_2)_3CH_3$ | H |
| I-273 | $CH_2CH_2CH_2CH_2CH_3$ | $(CH_2)_3CH_3$ | H |
| I-274# | $CH_3$ | $(CH_2)_4CH_3$ | H |
| I-275# | $CH_2CH_3$ | $(CH_2)_4CH_3$ | H |
| I-276# | $CH_2CH_2CH_3$ | $(CH_2)_4CH_3$ | H |
| I-277# | $CH_2CH_2CH_2CH_3$ | $(CH_2)_4CH_3$ | H |
| I-278 | $CH_2CH_2CH_2CH_2CH_3$ | $(CH_2)_4CH_3$ | H |
| I-279# | $CH_3$ | $(CH_2)_5CH_3$ | H |
| I-280# | $CH_2CH_3$ | $(CH_2)_5CH_3$ | H |
| I-281# | $CH_2CH_2CH_3$ | $(CH_2)_5CH_3$ | H |
| I-282# | $CH_2CH_2CH_2CH_3$ | $(CH_2)_5CH_3$ | H |
| I-283 | $CH_2CH_2CH_2CH_2CH_3$ | $(CH_2)_5CH_3$ | H |
| I-284# | $CH_3$ | $(CH_2)_6CH_3$ | H |
| I-285# | $CH_2CH_3$ | $(CH_2)_6CH_3$ | H |
| I-286# | $CH_2CH_2CH_3$ | $(CH_2)_6CH_3$ | H |
| I-287# | $CH_2CH_2CH_2CH_3$ | $(CH_2)_6CH_3$ | H |
| I-288 | $CH_2CH_2CH_2CH_2CH_3$ | $(CH_2)_6CH_3$ | H |
| I-289# | $CH_3$ | $(CH_2)_7CH_3$ | H |
| I-290# | $CH_2CH_3$ | $(CH_2)_7CH_3$ | H |
| I-291# | $CH_2CH_2CH_3$ | $(CH_2)_7CH_3$ | H |
| I-292# | $CH_2CH_2CH_2CH_3$ | $(CH_2)_7CH_3$ | H |
| I-293 | $CH_2CH_2CH_2CH_2CH_3$ | $(CH_2)_7CH_3$ | H |
| I-294# | $CH_3$ | $(CH_2)_8CH_3$ | H |
| I-295# | $CH_2CH_3$ | $(CH_2)_8CH_3$ | H |
| I-296# | $CH_2CH_2CH_3$ | $(CH_2)_8CH_3$ | H |
| I-297# | $CH_2CH_2CH_2CH_3$ | $(CH_2)_8CH_3$ | H |
| I-298 | $CH_2CH_2CH_2CH_2CH_3$ | $(CH_2)_8CH_3$ | H |
| # Nicht erfindungsgemäß | | | |

Bevorzugte Ausgestaltungen der erfindungsgemäßen Mischungen enthalten als aktive Komponente 1 eine Verbindung ausgewählt aus der Liste:

5-Methyl-6-(3,5,5-trimethyl-hexyl)-[1,2,4]triazolo[1,5-a]pyrimidin-7-ylamin,
5-Methyl-6-octyl-[1,2,4]triazolo[1,5-a]pyrimidin-7-ylamin,
5-Ethyl-6-octyl-[1,2,4]triazolo[1,5-a]pyrimidin-2,7-diamin,
5-Ethyl-6-octyl-[1,2,4]triazolo[1,5-a]pyrimidin-7-ylamin,
5-Ethyl-6-(3,5,5-trimethyl-hexyl)-[1,2,4]triazolo[1,5-a]pyrimidin-7-ylamin,
6-Octyl-5-propyl-[1,2,4]triazolo[1,5-a]pyrimidin-7-ylamin,
5-Methoxymethyl-6-octyl-[1,2,4]triazolo[1,5-a]pyrimidin-7-ylamin,
6-Octyl-5-trifluormethyl-[1,2,4]triazolo[1,5-a]pyrimidin-7-ylamin und
5-Trifluormethyl-6-(3,5,5-trimethyl-hexyl)-[1,2,4]triazolo[1,5-a]pyrimidin-7-ylamin.

Weitere bevorzugte Ausführungen der erfindungsgemäßen Mischungen betreffen Kombinationen einer der Verbindungen der Tabelle 1, insbesondere eine der voranstehend bevorzugten Verbindungen I und eines der folgenden Wirkstoffe II:

A) Azole :

Cyproconazole, Difenoconazole, Fluquinconazole, Flusilazole, Metconazol, Propiconazole, Prothioconazole, Tebuconazole Prochloraz, Cyazofamid;
Carbendazim;
Ethaboxam;

B) Strobilurine :

Azoxystrobin, Enestroburin, Fluoxastrobin, Pyraclostrobin, Trifloxystrobin, oder (2-Chlor-5-[1-(3-methyl-benzyloxyimino)-ethyl]-benzyl)-carbaminsäuremethylester [B-6], (2-Chlor-5-[1-(6-methyl-pyridin-2-yl-methoxyimino)-ethyl]-benzyl)-carbaminsäuremethylester [B-7];

C) Carbonsäureamide :

Benalaxyl, Boscalid, Metalaxyl, Ofurace, Oxadixyl,
Dimethomorph;
Fluopicolide (Picobenzamid), Zoxamide;
Mandipropamid;

D) Heterocylische Verbindungen : Fluazinam;

Cyprodinil, Pyrimethanil;
Dodemorph,
Iprodione, Vinclozolin;
Famoxadone, Fenamidone;
Amisulbrom;
5-Chlor-7-(4-methyl-piperidin-1-yl)-6-(2,4,6-trifluor-phenyl)-[1,2,4]tri-azolo[1,5-a]pyrimidin [D-8];
Captan, Folpet;

E) Carbamate : Mancozeb, Maneb, Metiram, Propineb; Iprovalicarb, Flubenthiavalicarb; 3-(4-Chlor-phenyl)-3-(2-isopropoxycarbonylamino-3-methyl-butyrylamino)-propansäuremethylester [E-7];
und
F) Sonstige Wirkstoffe, ausgewählt aus Schwefelhaltige Heterocyclylverbindungen: Dithianon; Organophosphorverbindungen: Fosetyl, Fosetyl-Aluminium, Phosphorige Säure und ihre Salze; Organochlorverbindungen: Chlorothalonil, Thiophanate-Methyl; Anorganische Wirkstoffe: Bordeaux Brühe, Kupferacetat, Kupferhydroxid, Kupferoxychlorid, basisches Kupfersulfat;
Sonstige: Cymoxanil, Metrafenone;
Wachstumsretardantien: Prohexadion und seine Salze;

Bevorzugte Ausgestaltungen betreffen die in der Tabelle A aufgeführten Zusammensetzungen, wobei jeweils

eine Zeile der Tabelle A einer fungiziden Zusammensetzung entspricht, umfassend die jeweilige genannte Verbindung der Formel I (Komponente 1), und einen Wirkstoff der genannten Gruppen, wobei dieser Wirkstoff vorzugsweiese aus den voranstehend definierten bevorzugten Ausführungen ausgewählt ist.

Tabelle A

| Zeile | Komponente 1 | Komponente 2 |
|---|---|---|
| A-1# | Tab. 1, I-9 | Ein Wirkstoff II aus der Gruppe A |
| A-2# | Tab. 1, I-9 | Ein Wirkstoff II aus der Gruppe B |
| A-3# | Tab. 1, I-9 | Ein Wirkstoff II aus der Gruppe C |
| A-4# | Tab. 1, I-9 | Ein Wirkstoff II aus der Gruppe D |
| A-5# | Tab. 1, I-9 | Ein Wirkstoff II aus der Gruppe E |
| A-6# | Tab. 1, I-9 | Ein Wirkstoff II aus der Gruppe F |
| A-7# | Tab. 1, I-18 | Ein Wirkstoff II aus der Gruppe A |
| A-8# | Tab. 1, I-18 | Ein Wirkstoff II aus der Gruppe B |
| A-9# | Tab. 1, I-18 | Ein Wirkstoff II aus der Gruppe C |
| A-10# | Tab. 1, I-18 | Ein Wirkstoff II aus der Gruppe D |
| A-11# | Tab. 1, I-18 | Ein Wirkstoff II aus der Gruppe E |
| A-12# | Tab. 1, I-18 | Ein Wirkstoff II aus der Gruppe F |
| A-13 | Tab. 1, I-25 | Ein Wirkstoff II aus der Gruppe A |
| A-14 | Tab. 1, I-25 | Ein Wirkstoff II aus der Gruppe B |
| A-15 | Tab. 1, I-25 | Ein Wirkstoff II aus der Gruppe C |
| A-16 | Tab. 1, I-25 | Ein Wirkstoff II aus der Gruppe D |
| A-17 | Tab. 1, I-25 | Ein Wirkstoff II aus der Gruppe E |
| A-18 | Tab. 1, I-25 | Ein Wirkstoff II aus der Gruppe F |
| A-19 | Tab. 1, I-28 | Ein Wirkstoff II aus der Gruppe A |
| A-20 | Tab. 1, I-28 | Ein Wirkstoff II aus der Gruppe B |
| A-21 | Tab. 1, I-28 | Ein Wirkstoff II aus der Gruppe C |
| A-22 | Tab. 1, I-28 | Ein Wirkstoff II aus der Gruppe D |
| A-23 | Tab. 1, I-28 | Ein Wirkstoff II aus der Gruppe E |
| A-24 | Tab. 1, I-28 | Ein Wirkstoff II aus der Gruppe F |
| A-25 | Tab. 1, I-98 | Ein Wirkstoff II aus der Gruppe A |
| A-26 | Tab. 1, I-98 | Ein Wirkstoff II aus der Gruppe B |
| A-27 | Tab. 1, I-98 | Ein Wirkstoff II aus der Gruppe C |
| A-28 | Tab. 1, I-98 | Ein Wirkstoff II aus der Gruppe D |
| A-29 | Tab. 1, I-98 | Ein Wirkstoff II aus der Gruppe E |
| A-30 | Tab. 1, I-98 | Ein Wirkstoff II aus der Gruppe F |
| A-31 | Tab. 1, I-101 | Ein Wirkstoff II aus der Gruppe A |
| A-32 | Tab. 1, I-101 | Ein Wirkstoff II aus der Gruppe B |
| A-33 | Tab. 1, I-101 | Ein Wirkstoff II aus der Gruppe C |
| A-34 | Tab. 1, I-101 | Ein Wirkstoff II aus der Gruppe D |
| A-35 | Tab. 1, I-101 | Ein Wirkstoff II aus der Gruppe E |

(fortgesetzt)

| Zeile | Komponente 1 | Komponente 2 |
|---|---|---|
| A-36 | Tab. 1, I-101 | Ein Wirkstoff II aus der Gruppe F |
| A-37 | Tab. 1, I-110 | Ein Wirkstoff II aus der Gruppe A |
| A-38 | Tab. 1, I-110 | Ein Wirkstoff II aus der Gruppe B |
| A-39 | Tab. 1, I-110 | Ein Wirkstoff II aus der Gruppe C |
| A-40 | Tab. 1, I-110 | Ein Wirkstoff II aus der Gruppe D |
| A-41 | Tab. 1, I-110 | Ein Wirkstoff II aus der Gruppe E |
| A-42 | Tab. 1, I-110 | Ein Wirkstoff II aus der Gruppe F |
| A-43 | Tab. 1, I-113 | Ein Wirkstoff II aus der Gruppe A |
| A-44 | Tab. 1, I-113 | Ein Wirkstoff II aus der Gruppe B |
| A-45 | Tab. 1, I-113 | Ein Wirkstoff II aus der Gruppe C |
| A-46 | Tab. 1, I-113 | Ein Wirkstoff II aus der Gruppe D |
| A-47 | Tab. 1, I-113 | Ein Wirkstoff II aus der Gruppe E |
| A-48 | Tab. 1, I-113 | Ein Wirkstoff II aus der Gruppe F |
| A-49 | Tab. 1, I-120 | Ein Wirkstoff II aus der Gruppe A |
| A-50 | Tab. 1, I-120 | Ein Wirkstoff II aus der Gruppe B |
| A-51 | Tab. 1, I-120 | Ein Wirkstoff II aus der Gruppe C |
| A-52 | Tab. 1, I-120 | Ein Wirkstoff II aus der Gruppe D |
| A-53 | Tab. 1, I-120 | Ein Wirkstoff II aus der Gruppe E |
| A-54 | Tab. 1, I-120 | Ein Wirkstoff II aus der Gruppe F |
| A-55 | Tab. 1, I-180 | Ein Wirkstoff II aus der Gruppe A |
| A-56 | Tab. 1, I-180 | Ein Wirkstoff II aus der Gruppe B |
| A-57 | Tab. 1, I-180 | Ein Wirkstoff II aus der Gruppe C |
| A-58 | Tab. 1, I-180 | Ein Wirkstoff II aus der Gruppe D |
| A-59 | Tab. 1, I-180 | Ein Wirkstoff II aus der Gruppe E |
| A-60 | Tab. 1, I-180 | Ein Wirkstoff II aus der Gruppe F |
| A-61 | Tab. 1, I-245 | Ein Wirkstoff II aus der Gruppe A |
| A-62 | Tab. 1, I-245 | Ein Wirkstoff II aus der Gruppe B |
| A-63 | Tab. 1, I-245 | Ein Wirkstoff II aus der Gruppe C |
| A-64 | Tab. 1, I-245 | Ein Wirkstoff II aus der Gruppe D |
| A-65 | Tab. 1, I-245 | Ein Wirkstoff II aus der Gruppe E |
| A-66 | Tab. 1, I-245 | Ein Wirkstoff II aus der Gruppe F |
| A-67# | Tab. 1, I-290 | Ein Wirkstoff II aus der Gruppe A |
| A-68# | Tab. 1, I-290 | Ein Wirkstoff II aus der Gruppe B |
| A-69# | Tab. 1, I-290 | Ein Wirkstoff II aus der Gruppe C |
| A-70# | Tab. 1, I-290 | Ein Wirkstoff II aus der Gruppe D |
| A-71# | Tab. 1, I-290 | Ein Wirkstoff II aus der Gruppe E |
| A-72# | Tab. 1, I-290 | Ein Wirkstoff II aus der Gruppe F |
| # Nicht erfindungsgemäß | | |

Die vorgenannten Wirkstoffe können auch in Form ihrer landwirtschaftlich verträglichen Salze verwendet werden. Üblicherweise kommen dafür Alkali- oder Erdalkalisalze, wie Natrium-, Kalium- oder Calziumsalze in Frage.

Bevorzugt setzt man bei der Bereitstellung der Mischungen die reinen Wirkstoffe ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel als weitere Aktivkomponenten beimischen kann.

In einer bevorzugten Ausgestaltung der Erfindung kommen Mischungen aus einer Verbindung I und einem Wirkstoff II zur Anwendung. Unter bestimmten Umständen kann es vorteilhaft sein, eine Verbindung I mit zwei oder mehreren Wirkstoffen II zu kombinieren. Daneben können auch Mischungen zweier oder mehrerer Verbindungen I mit einem oder mehreren Wirkstoffen II in Betracht kommen.

Als weitere Aktivkomponenten im voranstehenden Sinne kommen besonders die eingangs genannten Wirkstoffe II und insbesondere die voranstehend genannten bevorzugten Wirkstoffe II in Frage. Im Fall ternärer Mischungen kommen als dritte Aktivkomponente bevorzugt Strobilurine, insbesondere Pyraclostrobin, Carbonsäureamide, insbesondere Boscalid, sowie Organophosphorverbindungen, insbesondere phosphorige Säure und ihre Salze, in Frage.

Die Verbindungen I und Wirkstoffe II werden üblicherweise in einem Gewichtsverhältnis von 100:1 bis 1:100, bevorzugt 50:1 bis 1:50, vorzugsweise 20:1 bis 1:20, insbesondere 10:1 bis 1:10 angewandt.

Die weiteren Aktivkomponenten werden gewünschtenfalls im Verhältnis von 50:1 bis 1:50, bevorzugt 20:1 bis 1:20 zu der Verbindung I zugemischt.

Die Aufwandmengen der erfindungsgemäßen Mischungen liegen je nach Art der Verbindung und des gewünschten Effekts bei 5 g/ha bis 2000 g/ha, vorzugsweise 50 bis 900 g/ha, insbesondere 50 bis 750 g/ha.

Die Aufwandmengen für Verbindungen I liegen entsprechend in der Regel bei 1 bis 1000 g/ha, vorzugsweise 10 bis 900 g/ha, insbesondere 20 bis 750 g/ha.

Die Aufwandmengen für Wirkstoffe II liegen je nach Art des Wirkstoffs II in der Regel bei 1 bis 2000 g/ha, vorzugsweise 10 bis 900 g/ha, insbesondere 40 bis 500 g/ha.

Bei der Saatgutbehandlung, z.B. durch Bestäuben, Beschichten oder Tränken von Saatgut, werden im allgemeinen Aufwandmengen an Mischung von 1 bis 1000 g/100 kg Saatgut, vorzugsweise 1 bis 750 g/100 kg, insbesondere 5 bis 500 g/100 kg verwendet.

Das Verfahren zur Bekämpfung von Schadpilzen erfolgt durch die getrennte oder gemeinsame Applikation der Verbindungen I und Wirkstoffen II oder der Mischungen aus Verbindungen I und Wirkstoffen II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen Mischungen, bzw. die Verbindungen I und Wirkstoffe II können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkyl-arylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpoly-glykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Formulierungen für die Saatgutbehandlung können zusätzlich Bindemittel und/oder Geliermittel und gegebenenfalls Farbstoffe enthalten.

Die Formulierungen enthalten im allgemeinen zwischen 0,01 und 95 Gew.-%, vorzugsweise zwischen 0,1 und 90 Gew.-% des Wirkstoffs. Die Wirkstoffe werden dabei in einer Reinheit von 90% bis 100%, vorzugsweise 95% bis 100% eingesetzt.

Für die Saatgutbehandlung ergeben die betreffenden Formulierungen nach zwei- bis zehnfacher Verdünnung Wirkstoffkonzentrationen von 0,01 bis 60 Gew.-%, bevorzugt 0,1 bis 40 Gew.-% in den fertig verwendbaren Zubereitungen.

Beispiele für erfindungsgemäße Formulierungen sind:

1. Produkte zur Verdünnung in Wasser

A Wasserlösliche Konzentrate (SL, LS)
10 Gew.-Teile einer erfindungsgemäßen Mischung werden mit 90 Gew.-Teilen Wasser oder einem wasserlöslichen Lösungsmittel gelöst. Alternativ werden Netzmittel oder andere Hilfsmittel zugefügt. Bei der Verdünnung in Wasser löst sich der Wirkstoff. Man erhält auf diese Weise eine Formulierung mit 10 Gew.-% Wirkstoffgehalt.

B Dispergierbare Konzentrate (DC)
20 Gew.-Teile einer erfindungsgemäßen Mischung werden in 70 Gew.-Teilen Cyclohexanon unter Zusatz von 10 Gew.-Teilen eines Dispergiermittels z.B. Polyvinylpyrrolidon gelöst. Bei Verdünnung in Wasser ergibt sich eine Dispersion. Der Wirkstoffgehalt beträgt 20 Gew.-%

C Emulgierbare Konzentrate (EC)
15 Gew.-Teile einer erfindungsgemäßen Mischung werden in 75 Gew.-Teilen Xylol unter Zusatz von Ca-Dodecylbenzolsulfonat und Ricinusölethoxylat (jeweils 5 Gew.-Teile) gelöst. Bei der Verdünnung in Wasser ergibt sich eine Emulsion. Die Formulierung hat 15 Gew.-% Wirkstoffgehalt.

D Emulsionen (EW, EO, ES)
25 Gew.-Teile einer erfindungsgemäßen Mischung werden in 35 Gew.-Teile Xylol unter Zusatz von Ca-Dodecylbenzolsulfonat und Ricinusölethoxylat (jeweils 5 Gew.-Teile) gelöst. Diese Mischung wird mittels einer Emulgiermaschine (z.B. Ultraturax) in 30 Gew.Teile Wasser gegeben und zu einer homogenen Emulsion gebracht. Bei der Verdünnung in Wasser ergibt sich eine Emulsion. Die Formulierung hat einen Wirkstoffgehalt von 25 Gew.-%.

E Suspensionen (SC, OD, FS)
20 Gew.-Teile einer erfindungsgemäßen Mischung werden unter Zusatz von 10 Gew.-Teilen Dispergier- und Netzmitteln und 70 Gew.-Teilen Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs. Der Wirkstoffgehalt in der Formulierung beträgt 20 Gew.-% .

F Wasserdispergierbare und wasserlösliche Granulate (WG, SG)
50 Gew.-Teile einer erfindungsgemäßen Mischung werden unter Zusatz von 50 Gew-Teilen Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs. Die Formulierung hat einen Wirkstoffgehalt von 50 Gew.-%.

G Wasserdispergierbare und wasserlösliche Pulver (WP, SP, SS, WS)
75 Gew.-Teile einer erfindungsgemäßen Mischung werden unter Zusatz von 25 Gew.-Teilen Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs. Der Wirkstoffgehalt der Formulierung beträgt 75 Gew.-%.

H Gelformulierungen
In einer Kugelmühle werden 20 Gew.-Teile einer erfindungsgemäßen Mischung, 10 Gew.-Teile Dispergiermittel, 1 Gew.-Teil Geliermittel und 70 Gew.-Teile Wasser oder eines organischen Lösungsmittels zu einer feinen Suspension vermahlen. Bei der Verdünnung mit Wasser ergibt sich eine stabile Suspension mit 20 Gew.-% Wirkstoffgehalt.

2. Produkte für die Direktapplikation

I Stäube (DP, DS)
5 Gew.-Teile einer erfindungsgemäßen Mischung werden fein gemahlen und mit 95 Gew.-Teilen feinteiligem Kaolin innig vermischt. Man erhält dadurch ein Stäubemittel mit 5 Gew.-% Wirkstoffgehalt.
J Granulate (GR, FG, GG, MG)
0,5 Gew-Teile einer erfindungsgemäßen Mischung werden fein gemahlen und mit 99,5 Gewichtsteilen Trägerstoffe verbunden. Gängige Verfahren sind dabei die Extrusion, die Sprühtrocknung oder die Wirbelschicht. Man erhält dadurch ein Granulat für die Direktapplikation mit 0,5 Gew.-% Wirkstoffgehalt.
K ULV- Lösungen (UL)
10 Gew.-Teile einer erfindungsgemäßen Mischung werden in 90 Gew.-Teilen eines organischen Lösungsmittel z.B. Xylol gelöst. Dadurch erhält man ein Produkt für die Direktapplikation mit 10 Gew.-% Wirkstoffgehalt.

Für die Saatgutbehandlung werden üblicherweise wasserlösliche Konzentrate (LS), Suspensionen (FS), Stäube (DS), wasserdispergierbare und wasserlösliche Pulver (WS, SS), Emulsionen (ES), emulgierbare Konzentrate (EC) und Gelformulierungen (GF) verwendet. Diese Formulierungen können auf das Saatgut unverdünnt oder, bevorzugt, verdünnt angewendet werden. Die Anwendung kann vor der Aussaat erfolgen.

Bevorzugt werden FS Formulierungen für die Saatgutbehandlung verwendet. Üblicherweise enthalten solche Formulierungen 1 bis 800 g/l Wirkstoff, 1 bis 200 g/l Tenside, 0 bis 200 g/l Frostschutzmittel, 0 bis 400 g/l Bindemittel, 0 bis 200 g/l Farbstoffe und Lösungsmittel, vorzugsweise Wasser.

Analoge Formulierungen A bis K der Verbindungen I, bzw. eines Wirkstoffs II enthalten die jeweilige Menge der Einzelwirkstoffe. Sie werden üblicherweise direkt vor Applikation beim Verdünnen auf die anwendungsfertige Wirkstoffkonzentration gemischt (Tankmix).

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:100 bis 100:1, bevorzugt 1:10 bis 10:1 zugemischt werden.

Als Adjuvants in diesem Sinne kommen insbesondere in Frage: organisch modifizierte Polysiloxane, z.B. Break Thru S 240®; Alkoholalkoxylate, z. B. Atplus 245®, Atplus MBA 1303®, Plurafac LF 300® und Lutensol ON 30®; EO-PO-Blockpolymerisate, z. B. Pluronic RPE 2035® und Genapol B®; Alkoholethoxylate, z. B. Lutensol XP 80®; und Natriumdioctylsulfosuccinat, z. B. Leophen RA®.

Die Verbindungen I und II, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Anwendungsbeispiele

Die fungizide Wirkung der Verbindungen und der Mischungen ließ sich durch folgende Versuche zeigen:

Die Wirkstoffe Amisulbrom, Cu-Hydroxid, Famoxadon, Phosphorige Säure und Zoxamid wurden als handelsübliche Formulierungen verwendet und mit Wasser auf die angegebenen Konzentrationen verdünnt.

Die Wirkstoffe wurden getrennt oder gemeinsam als eine Stammlösung aufbereitet mit 25 mg Wirkstoff, welcher mit einem Gemisch aus Aceton und/oder DMSO und dem Emulgator Uniperol® EL (Netzmittel mit Emulgier- und Dispergierwirkung auf der Basis ethoxylierter Alkylphenole) im Volumen-Verhältnis Lösungsmittel-Emulgator von 99 zu 1 ad 10 ml aufgefüllt wurde. Anschließend wurde ad 100 ml mit Wasser aufgefüllt. Diese Stammlösung wurde mit dem beschriebenen Lösungsmittel-Emulgator-Wasser Gemisch zu der unten angegeben Wirkstoffkonzentration verdünnt.

Anwendungsbeispiel 1 - Dauerwirksamkeit gegen die Krautfäule an Tomaten verursacht durch *Phytophthora infestans*

Blätter von Topfpflanzen der Sorte "Große Fleischtomate St. Pierre" wurden mit einer wässriger Suspension in der unten angegebenen Wirkstoffkonzentration bis zur Tropfnässe besprüht. 5 Tage später wurden die Blätter mit einer wässrigen Sorenaufschwemmung von *Phytophthora infestans* inokuliert. Anschließend wurden die Pflanzen in einer wasserdampf-gesättigten Kammer bei Temperaturen zwischen 18 und 20°C aufgestellt. Nach 6 Tagen hatte sich die Krautfäule auf den unbehandelten, jedoch infizierten Kontrollpflanzen so stark entwickelt, dass der Befall visuell in % ermittelt werden konnte.

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

- $\alpha$ entspricht dem Pilzbefall der behandelten Pflanzen in % und
- $\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Colby Formel:

$$E = x + y - x \cdot y/100$$

- E zu erwartender Wirkungsgrad, ausgedrückt in % der unbehandelten Kontrolle, beim Einsatz der Mischung aus den Wirkstoffen A und B in den Konzentrationen a und b
- x der Wirkungsgrad, ausgedrückt in % der unbehandelten Kontrolle, beim Einsatz des Wirkstoffs A in der Konzentration a
- y der Wirkungsgrad, ausgedrückt in % der unbehandelten Kontrolle, beim Einsatz des Wirkstoffs B in der Konzentration b

Tabelle A - Einzelwirkstoffe

| Nr. | Wirkstoff | Wirkstoffkonzentration in der Spritzbrühe [ppm] | Wirkungsgrad in % der unbehandelten Kontrolle |
|---|---|---|---|
| 1 | Kontrolle (unbehandelt) | - | (90% Befall) |
| 2 | Tabelle 1; I-18# | 16 | 11 |
| 3 | Tabelle 1; I-25 | 16 | 0 |
| 4 | Tabelle 1; I-28 | 63 | 44 |
| 5 | Tabelle 1; I-113 | 16 | 22 |
| 6 | Tabelle 1; I-120 | 16 | 33 |
| 7 | Tabelle 1; I-180 | 63<br>16 | 33<br>0 |
| 8 | Tabelle 1; I-245 | 4 | 0 |
| 9 | Metiram | 63<br>16 | 33<br>0 |
| 10 | Cyazofamid | 4 | 33 |
| 11 | Metalaxyl | 63<br>16 | 56<br>33 |
| 12 | Dimethomorph | 4 | 33 |
| # Nicht erfindungsgemäß | | | |

Tabelle B - erfindungsgemäße Mischungen der Wirkstoffe aus Tabelle 1

| Nr. | Wirkstoffmischung Konzentration Mischungsverhältnis | beobachteter Wirkungsgrad | berechneter Wirkungsgrad*) |
|---|---|---|---|
| 13 | I-18 + Cyazofamid<br>16 + 4 ppm<br>4:1# | 97 | 41 |
| 14 | I-18 + Dimethomorph<br>16 + 4 ppm<br>4:1# | 89 | 41 |
| 15 | I-25 + Metiram<br>63 + 16 ppm<br>4:1 | 67 | 33 |
| 16 | I-25 + Metalaxyl<br>16 + 63 ppm<br>1:4 | 83 | 56 |
| 17 | I-28 + Metiram<br>63 + 16 ppm<br>4:1 | 89 | 44 |
| 18 | I-28 + Metalaxyl<br>63 + 16 ppm<br>4:1 | 83 | 63 |
| 19 | I-113 + Metiram<br>16 + 63 ppm | 67 | 48 |

(fortgesetzt)

| Nr. | Wirkstoffmischung Konzentration Mischungsverhältnis | beobachteter Wirkungsgrad | berechneter Wirkungsgrad*) |
|---|---|---|---|
| | 1:4 | | |
| 20 | I-113 + Cyazofamid<br>16 + 4 ppm<br>4:1 | 67 | 48 |
| 21 | I-113 + Metalaxyl<br>16 + 63 ppm<br>1:4 | 83 | 65 |
| 22 | I-113 + Dimethomorph<br>16 + 4 ppm<br>4:1 | 67 | 48 |
| 23 | I-120 + Cyazofamid<br>16 + 4 ppm<br>4:1 | 99 | 56 |
| 24 | I-120 + Metalaxyl<br>16 + 63 ppm<br>1:4 | 94 | 70 |
| 25 | I-180 + Metiram<br>16 + 63 ppm<br>1:4 | 89 | 33 |
| 26 | I-180 + Metiram<br>63 + 63 ppm<br>1:1 | 99 | 56 |
| 27 | I-180 + Cyazofamid<br>4 + 4 ppm<br>1:1 | 72 | 33 |
| 28 | I-180 + Cyazofamid<br>16 + 4 ppm<br>4:1 | 97 | 33 |
| 29 | I-180 + Metalaxyl<br>16 + 63 ppm<br>1:4 | 94 | 56 |
| 30 | 1-180 + Dimethomorph<br>4 + 4 ppm<br>1:1 | 83 | 33 |
| 31 | 1-180 + Dimethomorph<br>16 + 4 ppm<br>4:1 | 97 | 33 |
| 32 | I-245 + Metalaxyl<br>4 + 16 ppm<br>1:4 | 92 | 33 |

*) berechneter Wirkungsgrad nach der Colby-Formel
# Nicht erfindungsgemäß

Anwendungsbeispiel 2 - Aktivität gegen die Krautfäule an Tomaten verursacht durch *Phytophthora infestans* bei protektiver Behandlung

Blätter von getopften Tomatenpflanzen wurden mit einer wässriger Suspension in der unten angegebenen Wirkstoffkonzentration bis zur Tropfnässe besprüht. Nach sieben Tagen wurden die Blätter mit einer wässrigen Sporangienaufschwemmung von *Phytophthora infestans* infiziert. Anschließend wurden die Pflanzen in einer wasserdampfgesättigten Kammer bei Temperaturen zwischen 18 und 20°C aufgestellt. Nach 6 Tagen hatte sich die Krautfäule auf den unbehandelten, jedoch infizierten Kontrollpflanzen so stark entwickelt, dass der Befall visuell in % ermittelt werden konnte.

Die Auswertung erfolgte analog Beispiel 1.

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 33 | Kontrolle | - | | 90% (Befall) | |
| 34 | Tab. 1; 1-110 [I-110] | 4 | | 11 | |
| 35 | $Cu(OH)_2$ | 63 | | 11 | |
| 36 | Mancozeb | 63 | | 11 | |
| 37 | Phosporige Säure Dinatriumsalz ($Na_2HPO_3$) | 63 | | 33 | |
| 38 | [I-110] + $Cu(OH)_2$ | 4 + 63 | 1 : 4 | 56 | 21 |
| 39 | [I-110] + Mancozeb | 4 + 63 | 1 : 4 | 56 | 21 |
| 40 | [I-110] + $Na_2HPO_3$ | 4 + 63 | 1 : 16 | 67 | 41 |

Anwendungsbeispiel 3 - Wirksamkeit gegen Rebenperonospora verursacht durch *Plasmopara viticola*

Blätter von Topfreben wurden mit wässriger Suspension in der unten angegebenen Wirkstoffkonzentration bis zur Tropfnässe besprüht. Nach drei Tagen wurden die Unterseiten der Blätter mit einer wässrigen Sporangienaufschwemmung von *Plasmopara viticola* inokuliert. Danach wurden die Reben zunächst für 24 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Die Auswertung erfolgte analog Beispiel 1.

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 41 | Kontrolle | | | 90% (Befall) | |
| 42 | Tab. 1; 1-110 [I-110] | 16<br>4<br>0,25 | | 56<br>0<br>0 | |
| 43 | [B-6] | 16 | | 0 | |
| 44 | Amidosulbrom | 4 | | 22 | |
| 45 | Famoxadon | 4 | | 0 | |
| 46 | Iprovalicarb | 4 | | 0 | |
| 47 | [E-7] | 0,25 | | 0 | |
| 48 | Zoxamid | 4 | | 11 | |
| 49 | Ethaboxam | 0,25 | | 33 | |
| 50 | [I-110] + [B-6] | 16 + 16 | 1 : 1 | 78 | 56 |
| 51 | [I-110] + Amidosulbrom | 4 + 4 | 1 : 1 | 94 | 22 |

(fortgesetzt)

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 52 | [I-110] + Famoxadon | 4 + 4 | 1 : 1 | 78 | 0 |
| 53 | [I-110] + Iprovalicarb | 4 + 4 | 1 : 1 | 44 | 0 |
| 54 | [I-110] + [E-7] | 0,25+0,25 | 1 : 1 | 56 | 0 |
| 55 | [I-110] + Zoxamid | 4 + 4 | 1 : 1 | 56 | 11 |
| 56 | [I-110] + Ethaboxam | 0,25+0,25 | 1 : 1 | 56 | 33 |

Anwendungsbeispiel 4 - Wirksamkeit gegen Rebenperonospora verursacht durch *Plasmopara viticola*

Blätter von Topfreben wurden mit wässriger Suspension in der unten angegebenen Wirkstoffkonzentration bis zur Tropfnässe besprüht. Nach sieben Tagen wurden die Unterseiten der Blätter mit einer wässrigen Sporangienaufschwemmung von *Plasmopara viticola* inokuliert. Danach wurden die Reben zunächst für 24 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Die Auswertung erfolgte analog Beispiel 1.

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 57 | Kontrolle | | | 90% (Befall) | |
| 58 | Tab. 1; 1-110 [I-110] | 16<br>4 | | 0<br>0 | |
| 59 | Cymoxanil | 16 | | 33 | |
| 60 | Dithianon | 16 | | 0 | |
| 61 | Dimethomorph | 16 | | 67 | |
| 62 | [I-110] + Cymoxanil | 16 + 16 | 1 : 1 | 56 | 33 |
| 63 | [I-110] + Dithianon | 4 + 16 | 1 : 4 | 44 | 0 |
| 64 | [I-110] + Dimethomorph | 4 + 16 | 1 : 4 | 97 | 67 |

<u>Mikrotests</u>

Die Wirkstoffe wurden getrennt als Stammlösung formuliert mit einer Konzentration von 10000 ppm in DMSO.

Die Wirkstoffe Fluazinam, Pyraclostrobin, Kupferhydroxid, Flubenthiavalicarb, Phosphorige Säure, Dodemorph, Zoxamide, Amidosulbrom undTrifloxystrobin wurden als handelsübliche Formulierungen verwendet und mit Wasser auf die angegebenen Konzentrationen verdünnt.

Anwendungsbeispiel 5 - Aktivität gegen den Verursacher der Krautfäule *Phytophthora infestans* im Mikrotitter-Test

Die Stammlösung wird in eine Mikrotiterplatte (MTP) pipettiert und mit einem wässrigen Pilznährmedium auf Erbsensaftbasis auf die angegebene Wirkstoffkonzentration verdünnt. Anschließend erfolgte die Zugabe einer wässrigen Zoosporensuspension von *Phytophthora infestans*. Die Platten wurden in einer wasserdampfgesättigten Kammer bei Temperaturen von 18°C aufgestellt. Mit einem Absorbtionsphotometer wurden die MTPs am 7. Tag nach der Inokulation bei 405nm gemessen.

Die gemessenen Parameter wurden mit dem Wachstum der wirkstofffreien Kontrollvariante und dem pilz- und wirkstofffreien Leerwert verrechnet, um das relative Wachstum in % der Pathogene in den einzelnen Wirkstoffen zu ermitteln.

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 65 | Tab. 1; I-9 [I-9]# | 0,25<br>0,063<br>0,016 | | 7<br>6<br>1 | |
| 66 | Tab. 1; I-18 [I-18]# | 1<br>0,25<br>0,063 | | 45<br>16<br>6 | |
| 67 | Tab. 1; I-25 [I-25] | 1<br>0,25<br>0,063 | | 13<br>5<br>4 | |
| 68 | Tab. 1; I-28 [I-28] | 1<br>0,25<br>0,063<br>0,016 | | 24<br>14<br>0<br>0 | |
| 69 | Tab. 1; I-98 [I-98] | 4<br>1<br>0,25<br>0,063 | | 22<br>16<br>6<br>5 | |
| 70 | Tab. 1; I-101 [I-101] | 4<br>0.25 | | 9<br>3 | |
| 71 | Tab. 1; I-110 [I-110] | 1<br>0,25<br>0,063<br>0,016 | | 59<br>5<br>3<br>1 | |
| 72 | Tab. 1; I-113 [I-113] | 4<br>0,25 | | 36<br>3 | |
| 73 | Tab. 1; 1-120 [I-120] | 0,25<br>0,063<br>0,016 | | 6<br>2<br>0 | |
| 74 | Tab. 1; I-180 [I-180] | 1<br>0,25<br>0,063<br>0,016 | | 17<br>8<br>2<br>0 | |
| 75 | Tab. 1; I-245 [I-245] | 0,25<br>0,063<br>0,016 | | 12<br>0<br>0 | |
| 76 | Tab. 1; I-290 [I-290]# | 4<br>0,25<br>0,063 | | 3<br>0<br>0 | |
| 77 | Fosetyl-Al | 4 | | 6 | |
| 78 | $Cu(OH)_2$ | 4 | | 2 | |
| 79 | Folpet | 1 | | 6 | |
| 80 | Captan | 1 | | 12 | |
| 81 | Maneb | 1 | | 6 | |

(fortgesetzt)

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 82 | Metiram | 16<br>4 | | 49<br>9 | |
| 83 | Metalaxyl | 4<br>1 | | 9<br>6 | |
| 84 | Flubenthiavalicarb | 0,25 | | 68 | |
| 85 | $Na_2HPO_3$ | 4 | | 6 | |
| 86 | $Cu_2Cl(OH)_3$ | 16 | | 18 | |
| 87 | Cyprodinil | 4 | | 10 | |
| 88 | Prochloraz | 16 | | 6 | |
| 89 | Fenamidon | 0,063 | | 40 | |
| 90 | Enestroburin | 1 | | 35 | |
| 91 | Benalaxyl | 4 | | 13 | |
| 92 | Oxadixyl | 16<br>4<br>1 | | 17<br>2<br>0 | |
| 93 | Ofurace | 16<br>4 | | 19<br>0 | |
| 94 | Difenoconazol | 4 | | 24 | |
| 95 | Tebuconazol | 16<br>4<br>1 | | 9<br>10<br>8 | |
| 96 | Propiconazol | 16<br>4<br>1 | | 12<br>11<br>1 | |
| 97 | Cyproconazol | 4 | | 9 | |
| 98 | Flusilazol | 4<br>1 | | 11<br>0 | |
| 99 | Fluquinconazol | 4<br>1 | | 0<br>0 | |
| 100 | Boscalid | 4<br>1 | | 17<br>2 | |
| 101 | Metrafenon | 4 | | 2 | |
| 102 | [D-8] | 1 | | 43 | |
| 103 | Vinclozolin | 16 | | 0 | |
| 104 | [B-6] | 0,25 | | 10 | |
| 105 | Trifloxystrobin | 1<br>0,25 | | 46<br>33 | |
| 106 | Fluazinam | 0,25 | | 9 | |
| 107 | Mandipropamid | 0,25<br>0,063 | | 40<br>10 | |

(fortgesetzt)

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 108 | Fluoxastrobin | 0,025<br>0,063 | | 2<br>1 | |
| 109 | Azoxystrobin | 0,063 | | 21 | |
| 110 | Pyraclostrobin | 0,063<br>0,016 | | 59<br>14 | |
| 111 | [I-9] + Fenamidon# | 0,016+0,063 | 1 : 4 | 63 | 41 |
| 112 | [I-9] + Enestroburin# | 0,25+1 | 1 : 4 | 92 | 40 |
| 113 | [I-9] + Mandipropamid# | 0,25+0,25 | 1 : 1 | 95 | 44 |
| 114 | [I-9] + Fluoxastrobin# | 0,25+0,25 | 1 : 1 | 91 | 9 |
| 115 | [I-9] + Pyraclostrobin# | 0,063+0,016 | 4 : 1 | 40 | 19 |
| 116 | [I-18] + Cyprodinil# | 1+4 | 1 : 4 | 83 | 59 |
| 117 | [I-18] + Enestroburin# | 0,25+1 | 1 : 4 | 91 | 45 |
| 118 | [I-18] + Benalaxyl# | 1+4 | 1 : 4 | 97 | 52 |
| 119 | [I-18] + Oxadixyl# | 1+4 | 1 : 4 | 96 | 46 |
| 120 | [I-18] + Ofurace# | 1+4 | 1 : 4 | 99 | 45 |
| 121 | [I-18] + Difenoconazol# | 1+4 | 1 : 4 | 89 | 58 |
| 122 | [I-18] + Tebuconazol# | 1+4 | 1 : 4 | 94 | 50 |
| 123 | [I-18] + Propiconazol# | 1+4 | 1 : 4 | 96 | 51 |
| 124 | [I-18] + Mandipropamid# | 0,25+0,25 | 1 : 1 | 96 | 50 |
| 125 | [I-18] + Fluoxastrobin# | 0,25+0,25 | 1 : 1 | 92 | 18 |
| 126 | [I-18] + Azoxystrobin# | 0,063+0,063 | 1 : 1 | 49 | 26 |
| 127 | [I-18] + Pyraclostrobin# | 0,063+0,016 | 4 : 1 | 39 | 19 |
| 128 | [I-25] + Fosetyl-Al | 1+4 | 1 : 4 | 69 | 18 |
| 129 | [I-25] + $Cu(OH)_2$ | 1+4 | 1 : 4 | 95 | 15 |
| 130 | [I-25] + Metiram | 1+4 | 1 : 4 | 98 | 21 |
| 131 | [I-25] + Metalaxyl | 1+4 | 1 : 4 | 78 | 21 |
| 132 | [I-25] + $Na_2HPO_3$ | 1+4 | 1 : 4 | 74 | 15 |
| 133 | [I-25] + Enestroburin | 0,25+1 | 1 : 4 | 94 | 38 |
| 134 | [I-25] + Cyproconazol | 1+4 | 1 : 4 | 75 | 21 |
| 135 | [I-25] + Flusilazol | 1+4 | 1 : 4 | 89 | 23 |
| 136 | [I-25] + Fluquinconazol | 1+4 | 1 : 4 | 94 | 13 |
| 137 | [I-25] + Boscalid | 1+4 | 1 : 4 | 95 | 28 |
| 138 | [I-25] + Metrafenon | 1+4 | 1 : 4 | 90 | 14 |
| 139 | [I-25] + [B-6] | 0,25+0,25 | 1 : 1 | 58 | 15 |
| 140 | [I-25] + Trifloxystrobin | 1+1 | 1 : 1 | 79 | 53 |
| 141 | [I-25] + Pyraclostrobin | 0,063+0,016 | 4 : 1 | 95 | 17 |
| 142 | [I-28] + $Cu(OH)_2$ | 1+4 | 1 : 4 | 98 | 26 |

(fortgesetzt)

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 143 | [I-28] + Flubenthiavalicarb | 0,063+0,25 | 1 : 4 | 99 | 68 |
| 144 | [I-28] + Fenamidon | 0,016+0,063 | 1 : 4 | 63 | 40 |
| 145 | [I-28] + Cyproconazol | 1+4 | 1 : 4 | 69 | 31 |
| 146 | [I-28] + Flusilazol | 1+4 | 1 : 4 | 95 | 33 |
| 147 | [I-28] + Fluquinconazol | 1+4 | 1 : 4 | 89 | 24 |
| 148 | [I-28] + Boscalid | 1+4 | 1 : 4 | 89 | 37 |
| 149 | [I-28] + Metrafenon | 1+4 | 1 : 4 | 78 | 26 |
| 150 | [I-28] + Fluazinam | 0,25+0,25 | 1 : 1 | 67 | 22 |
| 151 | [I-28] + Mandipropamid | 0,063+0,063 | 1 : 1 | 58 | 10 |
| 152 | [I-28] + Fluoxastrobin | 0,25+0,25 | 1 : 1 | 95 | 16 |
| 153 | [I-28] + Azoxystrobin | 0,063+0,063 | 1 : 1 | 77 | 21 |
| 154 | [I-28] + Pyraclostrobin | 0,063+0,016 | 4 : 1 | 47 | 14 |
| 155 | [I-98] + $Cu_2Cl(OH)_3$ | 4+16 | 1 : 4 | 99 | 36 |
| 156 | [I-98] + Enestroburin | 0,25+1 | 1 : 4 | 87 | 38 |
| 157 | [I-98] + Tebuconazol | 4+16 | 1 : 4 | 69 | 29 |
| 158 | [I-98] + Propiconazol | 4+16 | 1 : 4 | 83 | 31 |
| 159 | [I-98] + Fluquinconazol | 1+4 | 1 : 4 | 65 | 16 |
| 160 | [I-98] + Metrafenon | 1+4 | 1 : 4 | 47 | 17 |
| 161 | [I-98] + Fluoxastrobin | 0,063+0,063 | 1 : 1 | 93 | 4 |
| 162 | [I-98] + Azoxystrobin | 0,063+0,063 | 1 : 1 | 48 | 25 |
| 163 | [I-101] + Maneb | 0,25+1 | 1 : 4 | 57 | 11 |
| 164 | [I-101] + $Cu_2Cl(OH)_3$ | 4+16 | 1 : 4 | 75 | 25 |
| 165 | [I-101] + Prochloraz | 4+16 | 1 : 4 | 81 | 14 |
| 166 | [I-101] + Enestroburin | 0,25+1 | 1 : 4 | 59 | 37 |
| 167 | [I-101] + Vinclozolin | 4+16 | 1 : 4 | 48 | 9 |
| 168 | [I-101] + Mandipropamid | 0,25+0,25 | 1 : 1 | 66 | 42 |
| 169 | [I-101] + Fluoxastrobin | 0,25+0,25 | 1 : 1 | 91 | 5 |
| 170 | [I-101] + Pyraclostrobin | 0,25+0,063 | 4 : 1 | 87 | 60 |
| 171 | [I-110] + Metalaxyl | 0,25+1 | 1 : 4 | 50 | 11 |
| 172 | [I-110] + Captan | 0,25+1 | 1 : 4 | 64 | 16 |
| 173 | [I-110] + Metiram | 1+4 | 1 : 4 | 84 | 63 |
| 174 | [I-110]+Flubenthiavalicarb | 0,063+0,25 | 1 : 4 | 98 | 69 |
| 175 | [I-110] + Fenamidon | 0,016+0,063 | 1 : 4 | 72 | 41 |
| 176 | [I-110] + Enestroburin | 0,25+1 | 1 : 4 | 99 | 38 |
| 177 | [I-110] + Oxadixyl | 0,25+1 | 1 : 4 | 48 | 5 |
| 178 | [I-110] + Tebuconazol | 0,25+1 | 1 : 4 | 88 | 13 |
| 179 | [I-110] + Propiconazol | 0,25+1 | 1 : 4 | 75 | 6 |

(fortgesetzt)

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 180 | [I-110] + Cyproconazol | 1+4 | 1 : 4 | 76 | 62 |
| 181 | [I-110] + Flusilazol | 1+4 | 1 : 4 | 84 | 63 |
| 182 | [I-110] + Boscalid | 0,25+1 | 1 : 4 | 73 | 7 |
| 183 | [I-110] + [B-6] | 0,25+0,25 | 1 : 1 | 48 | 15 |
| 184 | [I-110] + Trifloxystrobin | 0,25+0,25 | 1 : 1 | 66 | 36 |
| 185 | [I-110] + Mandipropamid | 0,63+0,63 | 1 : 1 | 76 | 12 |
| 186 | [I-110] + Fluoxastrobin | 0,63+0,63 | 1 : 1 | 93 | 4 |
| 187 | [I-110] + Azoxystrobin | 0,63+0,63 | 1 : 1 | 85 | 23 |
| 188 | [I-110] + Pyraclostrobin | 0,63+0,63 | 1 : 1 | 55 | 16 |
| 189 | [I-113] + Prochloraz | 4+16 | 1 : 4 | 99 | 40 |
| 190 | [I-113] + Oxadixyl | 4+16 | 1 : 4 | 63 | 46 |
| 191 | [I-113] + Ofurace | 4+16 | 1 : 4 | 68 | 48 |
| 192 | [I-113] + Propiconazol | 4+16 | 1 : 4 | 93 | 43 |
| 193 | [I-113] + Fluquinconazol | 1+4 | 1 : 4 | 71 | 7 |
| 194 | [I-113] + Trifloxystrobin | 0,25+0,25 | 1 : 1 | 51 | 35 |
| 195 | [I-113] + Mandipropamid | 0,25+0,25 | 1 : 1 | 93 | 42 |
| 196 | [I-113] + Fluoxastrobin | 0,25+0,25 | 1 : 1 | 95 | 5 |
| 197 | [I-113] + Pyraclostrobin | 0,25+0,063 | 4 : 1 | 96 | 60 |
| 198 | [I-120] + Captan | 0,25+1 | 1 : 4 | 89 | 17 |
| 199 | [I-120] + Benthivalicarb | 0,063+0,25 | 1 : 4 | 98 | 64 |
| 200 | [I-120] + Fenamidon | 0,016+0,063 | 1 : 4 | 72 | 40 |
| 201 | [I-120] + Flusilazol | 0,25+1 | 1 : 4 | 89 | 6 |
| 202 | [I-120] + Fluquinconazol | 0,25+1 | 1 : 4 | 71 | 6 |
| 203 | [I-120] + [D-8] | 0,25+1 | 1 : 4 | 79 | 46 |
| 204 | [I-120] + Fluoxastrobin | 0,063+0,063 | 1 : 1 | 95 | 3 |
| 205 | [I-120] + Azoxystrobin | 0,063+0,063 | 1 : 1 | 92 | 23 |
| 206 | [I-120] + Pyraclostrobin | 0,063+0,016 | 4 : 1 | 54 | 16 |
| 207 | [I-180] + Metiram | 1+4 | 1 : 4 | 57 | 24 |
| 208 | [I-180]+Flubenthiavalicarb | 0,063+0,25 | 1 : 4 | 95 | 69 |
| 209 | [I-180] + Fenamidon | 0,016+0,063 | 1 : 4 | 62 | 40 |
| 210 | [I-180] + Enestroburin | 0,25+1 | 1 : 4 | 96 | 40 |
| 211 | [I-180] + Benalaxyl | 1+4 | 1 : 4 | 70 | 28 |
| 212 | [I-180] + Oxadixyl | 1+4 | 1 : 4 | 95 | 18 |
| 213 | [I-180] + Ofurace | 1+4 | 1 : 4 | 92 | 17 |
| 214 | [I-180] + Difenoconazol | 1+4 | 1 : 4 | 86 | 37 |
| 215 | [I-180] + Tebuconazol | 1+4 | 1 : 4 | 97 | 25 |
| 216 | [I-180] + Propiconazol | 1+4 | 1 : 4 | 88 | 26 |

(fortgesetzt)

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 217 | [I-180] + [B-6] | 0,25+0,25 | 1 : 1 | 40 | 16 |
| 218 | [I-180] + Trifloxystrobin | 0,25+0,25 | 1 : 1 | 60 | 38 |
| 219 | [I-180] + Mandipropamid | 0,063+0,063 | 1 : 1 | 39 | 11 |
| 220 | [I-180] + Azoxystrobin | 0,063+0,063 | 1 : 1 | 52 | 22 |
| 221 | [I-245] + Fenamidon | 0,016+0,063 | 1 : 4 | 73 | 40 |
| 222 | [I-245] + Fluazinam | 0,25+0,25 | 1 : 1 | 51 | 20 |
| 223 | [I-245] + Mandipropamid | 0,063+0,063 | 1 : 1 | 51 | 10 |
| 224 | [I-245] + Fluoxastrobin | 0,25+0,25 | 1 : 1 | 96 | 14 |
| 225 | [I-245] + Azoxystrobin | 0,063+0,063 | 1 : 1 | 51 | 21 |
| 226 | [I-245] + Pyraclostrobin | 0,25+0,063 | 4 : 1 | 94 | 64 |
| 227 | [I-290] + Folpet# | 0,25+1 | 1 : 4 | 45 | 6 |
| 228 | [I-290] + Metiram# | 4+16 | 1 : 4 | 80 | 51 |
| 229 | [I-290]+Flubenthiavalicarb# | 0,063+0,25 | 1 : 4 | 89 | 68 |
| 230 | [I-290] + [B-6]# | 0,25+0,25 | 1 : 1 | 30 | 10 |
| 231 | [I-290] + Fluoxastrobin# | 0,25+0,25 | 1 : 1 | 95 | 2 |
| # Nicht erfindungsgemäß | | | | | |

Anwendungsbeispiel 6 - Aktivität gegen den Verursacher der Grauschimmel *Botrytis cinerea* im Mikrotitter-Test

Die Stammlösung wird in eine Mikrotitterplatte (MTP) pipettiert und mit einem wässrigen Pilznährmedium auf Malzbasis auf die angegebene Wirkstoffkonzentration verdünnt. Anschließend erfolgte die Zugabe einer wässrigen Sporensuspension von *Botrytis cinerea*. Die Platten wurden in einer wasserdampf-gesättigten Kammer bei Temperaturen von 18°C aufgestellt. Mit einem Absorbtionsphotometer wurden die MTPs am 7. Tag nach der Inokulation bei 405nm gemessen.

Die Auswertung erfolgte analog Beispiel 5.

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 232 | Tab. 1; I-9 [I-9]# | 0,25 | | 8 | |
| 233 | Tab. 1; I-18 [I-18]# | 16<br>1<br>0,063 | | 11<br>8<br>6 | |
| 234 | Tab. 1; I-25 [I-25] | 0,25 | | 5 | |
| 235 | Tab. 1; I-28 [I-28] | 4 | | 0 | |
| 236 | Tab. 1; I-98 [I-98] | 1<br>0,25 | | 5<br>4 | |
| 237 | Tab. 1; I-101 [I-101] | 1 | | 1 | |
| 238 | Tab. 1; I-110 [I-110] | 0,25<br>0,063 | | 18<br>8 | |
| 239 | Tab. 1; 1-120 [I-120] | 16<br>1<br>0,063 | | 15<br>9<br>0 | |

(fortgesetzt)

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 240 | Tab. 1; I-180 [I-180] | 0,25<br>0,016 | | 13<br>3 | |
| 241 | Tab. 1; I-245 [I-245] | 0,25 | | 0 | |
| 242 | Tab. 1; I-290 [I-290]# | 1 | | 4 | |
| 243 | Chlorothalonil | 1 | | 55 | |
| 244 | Folpet | 1 | | 2 | |
| 245 | $CuSO_4$ | 63 | | 0 | |
| 246 | Thiophanat-methyl | 0,25 | | 12 | |
| 247 | Tebuconazol | 0,25 | | 50 | |
| 248 | Flusilazol | 0,25 | | 43 | |
| 249 | Fluquinconazol | 0,063 | | 22 | |
| 250 | Prothioconazol | 4 | | 48 | |
| 251 | Vinclozolin | 1 | | 21 | |
| 252 | Zoxamid | 1 | | 55 | |
| 253 | [B-6] | 16 | | 53 | |
| 254 | Fluazinam | 0,063 | | 50 | |
| 255 | [I-9] + Chlorothalonil# | 0,25+1 | 1 : 4 | 91 | 59 |
| 256 | [I-18]+Thiophanat-methyl# | 0,063+0,25 | 1 : 4 | 35 | 17 |
| 257 | [I-18] + Flusilazol# | 0,063+0,25 | 1 : 4 | 76 | 46 |
| 258 | [I-18] + Prothioconazol# | 1+4 | 1 : 4 | 99 | 52 |
| 259 | [I-18] + [B-6]# | 16+16 | 1 : 1 | 81 | 58 |
| 260 | [I-25] + Chlorothalonil | 0,25+1 | 1 : 4 | 99 | 57 |
| 261 | [I-25] + Folpet | 0,25+1 | 1 : 4 | 61 | 7 |
| 262 | [I-28] + Maneb | 4+16 | 1 : 4 | 69 | 15 |
| 263 | [I-98] + Prothioconazol | 1+4 | 1 : 4 | 90 | 51 |
| 264 | [I-98] + Vinclozolin | 0,25+1 | 1 : 4 | 68 | 25 |
| 265 | [I-101] + Zoxamid | 1+1 | 1 : 1 | 69 | 55 |
| 266 | [I-110] + Chlorothalonil | 0,25+1 | 1 : 4 | 93 | 63 |
| 267 | [I-110] + Folpet | 0,25+1 | 1 : 4 | 50 | 20 |
| 268 | [I-110] + Vinclozolin | 0,25+1 | 1 : 4 | 81 | 35 |
| 269 | [I-110] + Fluazinam | 0,063+0,063 | 1 : 1 | 77 | 54 |
| 270 | [I-120] + $CuSO_4$ | 16+63 | 1 : 4 | 53 | 15 |
| 271 | [I-120] + Tebuconazol | 0,063+0,25 | 1 : 4 | 67 | 50 |
| 272 | [I-120] + Prothioconazol | 1+4 | 1 : 4 | 94 | 53 |
| 273 | [I-180] + Chlorothalonil | 0,25+1 | 1 : 4 | 92 | 61 |
| 274 | [I-180] + Folpet | 0,25+1 | 1 : 4 | 75 | 15 |
| 275 | [I-180] + Fluquinconazol | 0,016+0,063 | 1 : 4 | 100 | 24 |

(fortgesetzt)

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 276 | [I-180] + Vinclozolin | 0,25+1 | 1 : 4 | 89 | 31 |
| 277 | [I-180] + Carbendazim | 0,016+0,016 | 1 : 1 | 36 | 15 |
| 278 | [I-245] + Vinclozolin | 0,25+1 | 1 : 4 | 55 | 21 |
| 279 | [I-290] + Prothioconazol# | 1+4 | 1 : 4 | 88 | 51 |
| # Nicht erfindungsgemäß | | | | | |

Anwendungsbeispiel 7 - Aktivität gegen den Verursacher des Reisbrandes *Pyricularia oryzae* im Mikrotitter-Test

Die Stammlösungen wurden dem Verhältnis entsprechend gemischt, in eine Mikrotitterplatte (MTP) pipettiert und mit einem wässrigen Pilznährmedium auf Malzbasis auf die angegebene Wirkstoffkonzentration verdünnt. Anschließend erfolgte die Zugabe einer wässrigen Sporensuspension von *Pyricularia oryzae*. Die Platten wurden in einer wasserdampf-gesättigten Kammer bei Temperaturen von 18°C aufgestellt. Mit einem Absorbtionsphotometer wurden die MTPs am 7. Tag nach der Inokulation bei 405nm gemessen.

Die Auswertung erfolgte analog Beispiel 5.

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 280 | Tab. 1; I-9 [I-9]# | 1<br>0,25 | | 13<br>7 | |
| 281 | Tab. 1; I-18 [I-18]# | 16<br>4<br>1<br>0,25 | | 29<br>18<br>15<br>15 | |
| 282 | Tab. 1; I-25 [I-25] | 1 | | 24 | |
| 283 | Tab. 1; I-28 [I-28] | 1<br>0,25 | | 13<br>12 | |
| 284 | Tab. 1; I-98 [I-98] | 16<br>4<br>1<br>0,25 | | 43<br>15<br>0<br>0 | |
| 285 | Tab. 1; I-101 [I-101] | 16<br>4<br>1 | | 25<br>16<br>15 | |
| 286 | Tab. 1; I-110 [I-110] | 16 | | 8 | |
| 287 | Tab. 1; I-113 [I-113] | 4 | | 7 | |
| 288 | Tab. 1; I-120 [I-120] | 16 | | 25 | |
| 289 | Tab. 1; I-180 [I-180] | 1 | | 15 | |
| 290 | Tab. 1; I-245 [I-245] | 16<br>0,25 | | 23<br>10 | |
| 291 | Fosetyl-Al | 16 | | 49 | |
| 292 | Captan | 1 | | 44 | |
| 293 | Maneb | 4 | | 32 | |
| 294 | Metiram | 4 | | 26 | |

(fortgesetzt)

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 295 | Metalaxyl | 63 | | 2 | |
| 296 | $CuSO_4$ | 63 | | 0 | |
| 297 | Cyproconazol | 4 | | 54 | |
| 298 | Fluquinconazol | 4 | | 0 | |
| 299 | Prothioconazol | 4 | | 11 | |
| 300 | Boscalid | 63 | | 12 | |
| 301 | Metrafenon | 63 | | 42 | |
| 302 | Dodemorph | 16 | | 72 | |
| 303 | Cymoxanil | 16 | | 12 | |
| 304 | Carbendazim | 0,25 | | 20 | |
| 305 | Iprodion | 4 | | 46 | |
| 306 | Cayzofamid | 4 | | 23 | |
| 307 | [I-9] + Captan# | 0,25+1 | 1 : 4 | 85 | 48 |
| 308 | [I-9] + Cyproconazol# | 1+4 | 1 : 4 | 79 | 60 |
| 309 | [I-9] + Fluquinconazol# | 1+4 | 1 : 4 | 39 | 13 |
| 310 | [I-9] + Prothioconazol# | 1+4 | 1 : 4 | 91 | 23 |
| 311 | [I-18] + Captan# | 0,25+1 | 1 : 4 | 88 | 52 |
| 312 | [I-18] + Maneb# | 1+4 | 1 : 4 | 57 | 42 |
| 313 | [I-18] + Cyproconazol# | 1+4 | 1 : 4 | 86 | 61 |
| 314 | [I-18] + Fluquinconazol# | 1+4 | 1 : 4 | 47 | 15 |
| 315 | [I-18] + Iprodion# | 4+4 | 1 : 1 | 89 | 55 |
| 316 | [I-18] + Cyazofamid# | 16+4 | 4 : 1 | 61 | 45 |
| 317 | [I-25] + Maneb | 1+4 | 1 : 4 | 80 | 49 |
| 318 | [I-25] + Prothioconazol | 1+4 | 1 : 4 | 100 | 33 |
| 319 | [I-28] + Captan | 0,25+1 | 1 : 4 | 73 | 51 |
| 320 | [I-28] + Prothioconazol | 1+4 | 1 : 4 | 50 | 23 |
| 321 | [I-98] + Maneb | 1+4 | 1 : 4 | 58 | 32 |
| 322 | [I-98] + Metiram | 1+4 | 1 : 4 | 47 | 26 |
| 323 | [I-98] + Metalaxyl | 16+63 | 1 : 4 | 63 | 44 |
| 324 | [I-98] + Boscalid | 16+63 | 1 : 4 | 65 | 49 |
| 325 | [I-98] + Dodemorph | 4+16 | 1 : 4 | 98 | 76 |
| 326 | [I-98] + Cymoxanil | 16+16 | 1 : 1 | 79 | 50 |
| 327 | [I-98] + Carbendazim | 0,25+0,25 | 1 : 1 | 75 | 20 |
| 328 | [I-98] + Cyazofamid | 16+4 | 4 : 1 | 93 | 56 |
| 329 | [I-101] + Fosetyl-Al | 4+16 | 1 : 4 | 74 | 59 |
| 330 | [I-101] + $CuSO_4$ | 16+63 | 1 : 4 | 56 | 25 |
| 331 | [I-101] + Fluquinconazol | 1+4 | 1 : 4 | 46 | 15 |

(fortgesetzt)

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 332 | [I-101] + Prothioconazol | 1+4 | 1 : 4 | 64 | 25 |
| 333 | [I-101] + Iprodion | 4+4 | 1 : 1 | 89 | 54 |
| 334 | [I-101] + Cyazofamid | 4+1 | 4 : 1 | 91 | 22 |
| 335 | [I-110] + Metrafenon | 16+63 | 1 : 4 | 100 | 47 |
| 336 | [I-113] + Iprodion | 4+4 | 1 : 1 | 70 | 49 |
| 337 | [I-120] + Cyazofamid | 16+4 | 4 : 1 | 64 | 42 |
| 338 | [I-180] + Prothioconazol | 1+4 | 1 : 4 | 92 | 24 |
| 339 | [I-245] + Captan | 0,25+1 | 1 : 4 | 90 | 49 |
| 340 | [I-245] + Metrafenon | 16+63 | 1 : 4 | 100 | 55 |
| # Nicht erfindungsgemäß | | | | | |

Anwendungsbeispiel 8 - Aktivität gegen den Verursacher der Septoria Blattdürre *Septoria tritici* im Mikrotitter-Test

Die Stammlösung wurde dem Verhältnis entsprechend gemischt, in eine Mikrotitterplatte (MTP) pipettiert und mit einem wässrigen Pilznährmedium auf Malzbasis auf die angegebene Wirkstoffkonzentration verdünnt. Anschließend erfolgte die Zugabe einer wässrigen Sporensuspension von *Septoria tritici*. Die Platten wurden in einer wasserdampfgesättigten Kammer bei Temperaturen von 18°C aufgestellt. Mit einem Absorbtionsphotometer wurden die MTPs am 7. Tag nach der Inokulation bei 405nm gemessen.

Die Auswertung erfolgte analog Beispiel 5.

| Nr. | Wirkstoff / Wirkstoffkombination | Konz (mg/l) | Verhältnis | Beobachtete Wirkung (%) | Berechnete Wirkung nach Colby (%) |
|---|---|---|---|---|---|
| 341 | Tab. 1; I-120 [I-120] | 0,063 | | 0 | |
| 342 | Prohexadion-Ca | 0,25 | | 5 | |
| 343 | [I-120] + Prohexadion-Ca | 0,063+0,25 | 1 : 4 | 44 | 5 |

Aus den Ergebnissen der Versuche geht hervor, dass die erfindungsgemäßen Mischungen aufgrund des Synergismus erheblich besser wirksam sind, als nach der Colby-Formel vorausberechnet.

**Patentansprüche**

**1.** Fungizide Mischungen, enthaltend als aktive Komponenten:

1) Azolopyrimidinylamine der Formel I,

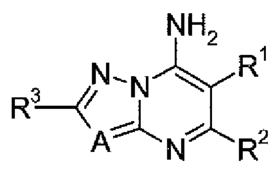

I

in der die Substituenten folgende Bedeutung haben:

$R^1$ $C_5$-$C_{12}$-Alkyl;
$R^2$ $C_1$-$C_{12}$-Alkyl, $C_1$-$C_4$-Halogenalkyl, $C_1$-$C_4$-Alkoxy-$C_1$-$C_4$-alkyl;

$R^3$ Wasserstoff, $NH_2$;
A N;

und
2) mindestens einen Wirkstoff II ausgewählt aus den folgenden Gruppen:

A) Azole ausgewählt aus Bitertanol, Bromuconazole, Cyproconazole, Difenoconazole, Diniconazole, Enilconazol, Epoxiconazole, Fluquinconazole, Fenbuconazole, Flusilazole, Flutriafol, Hexaconazol, Imibenconazole, Ipconazole, Metconazol, Myclobutanil, Penconazole, Propiconazole, Prothioconazole, Simeconazole, Triadimefon, Triadimenol, Tebuconazole, Tetraconazole, Triticonazole; Prochloraz, Pefurazoate, Imazalil, Triflumizole, Cyazofamid;
Benomyl, Carbendazim, Thiabendazole, Fuberidazole;
Ethaboxam, Etridiazole, Hymexazole;
B) Strobilurine ausgewählt aus Azoxystrobin, Dimoxystrobin, Enestroburin, Fluoxastrobin, Kresoxim-methyl, Metominostrobin, Orysastrobin, Picoxystrobin, Pyraclostrobin, Trifloxystrobin, oder (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethylester, 2-(ortho-((2,5-Dimethylphenyl-oxy-methylen)phenyl)-3-methoxy-acrylsäuremethylester;
C) Carbonsäureamide ausgewählt aus Carboxin, Benalaxyl, Boscalid, Fenhexamid, Flutolanil, Furametpyr, Mepronil, Metalaxyl, Mefenoxam, Ofurace, Oxadixyl, Oxycarboxin, Penthiopyrad, Thifluzamide, Tiadinil, 4-Difluormethyl-2-methyl-thiazol-5-carbonsäure-(4’-brom-biphenyl-2-yl)-amid, 4-Difluormethyl-2-methyl-thiazol-5-carbonsäure-(4’-trifluormethyl-biphenyl-2-yl)-amid, 4-Difluormethyl-2-methyl-thiazol-5-carbonsäure-(4’-chlor-3’-fluor-biphenyl-2-yl)-amid, 3-Difluormethyl-1-methyl-pyrazol-4-carbonsäure-(3’,4’-dichlor-4-fluor-biphenyl-2-yl)-amid, 3-Difluormethyl-1-methyl-pyrazol-4-carbonsäure-(3’,4’-dichlor-5-fluor-biphenyl-2-yl)-amid;
3,4-Dichlor-N-(2-cyanophenyl)-isothiazol-5-carbonsäureamid; Dimethomorph, Flumorph;
Flumetover, Fluopicolide (Picobenzamid), Zoxamide; Carpropamid, Diclocymet, Mandipropamid;
N-(2-{4-[3-(4-Chlor-phenyl)-prop-2-inyloxy]-3-methoxy-phenyl}-ethyl)-2-methansulfonylamino-3-methyl-butyramid, N-(2-{4-[3-(4-Chlorphenyl)-prop-2-inyloxy]-3-3-methoxy-phenyl}-ethyl)-2-ethansulfonyl-amino-3-methyl-butyramid;
D) Heterocylische Verbindungen ausgewählt aus Fluazinam, Pyrifenox;
Bupirimate, Cyprodinil, Fenarimol, Ferimzone, Mepanipyrim, Nuarimol, Pyrimethanil;
Triforine;
Fenpiclonil, Fludioxonil;
Aldimorph, Dodemorph, Fenpropimorph, Tridemorph;Fenpropidin, Iprodione, Procymidone, Vinclozolin;
Famoxadone, Fenamidone, Octhilinone, Probenazole;
Anilazin, Diclomezine, Pyroquilon, Proquinazid, Tricyclazole;
Amisulbrom;
5-Chlor-7-(4-methyl-piperidin-1-yl)-6-(2,4,6-trifluor-phenyl)-[1,2,4]triazolo[1,5-a]pyrimidin, 2-Butoxy-6-iodo-3-propyl-chromen-4-on;
Acibenzolar-S-methyl, Captafol, Captan, Dazomet, Folpet, Fenoxanil, Quinoxyfen;
3-[5-(4-Chlor-phenyl)-2,3-dimethyl-isoxazolidin-3-yl]-pyridin;
E) Carbamate ausgewählt aus Mancozeb, Maneb, Metam, Metiram, Ferbam, Propineb, Thiram, Zineb, Ziram; Diethofencarb, Iprovalicarb, Flubenthiavalicarb, Propamocarb; 3-(4-Chlor-phenyl)-3-(2-isopropoxycarbonylamino-3-methyl-butyryl-amino)-propansäuremethylester; und
F) Sonstige Wirkstoffe ausgewählt aus Guanidinen: Dodine, Iminoctadine, Guazatine;
Antibiotika: Kasugamycin, Streptomycin, Polyoxine, Validamycin A;
Nitrophenylderivaten: Binapacryl, Dinocap, Dinobuton;
Schwefelhaltigen Heterocyclylverbindungen: Dithianon, Isoprothiolane;
Organometallverbindungen: Fentin Salze, wie Fentin-Acetat; Organophosphorverbindungen: Edifenphos, Iprobenfos, Fosetyl, Fosetyl-Aluminium, Phosphorige Säure und ihre Salze, Pyrazophos, Tolclofos-methyl;
Organochlorverbindungen: Chlorothalonil, Dichlofluanid, Flusulfamide, Hexachlorbenzol, Phthalid, Pencycuron, Quintozen, Thiophanate-Methyl, Tolylfluanid;
Anorganischen Wirkstoffen: Bordeaux Brühe, Kupferacetat, Kupferhydroxid, Kupferoxychlorid, basisches Kupfersulfat, Schwefel;
Sonstigen: Cyflufenamid, Cymoxanil, Dimethirimol, Ethirimol, Furalaxyl, Metrafenone und Spiroxamine;
Wachstumsretardantien: Prohexadion und seine Salze, Trinexapacethyl, Chlormequat, Mepiquat-chlorid und Diflufenzopyr;

in einer synergistisch wirksamen Menge.

2. Fungizide Mischungen gemäß Anspruch 1, enthaltend eine Verbindung der Formel I und eine Verbindung der Formel II in einem Gewichtsverhältnis von 100:1 bis 1:100.

3. Fungizide Mischungen gemäß einem der Ansprüche 1 oder 2, enthaltend als Komponente 1 eine Verbindung ausgewählt aus 5-Methyl-6-(3,5,5-trimethyl-hexyl)-[1,2,4]triazolo[1,5-a]pyrimidin-7-ylamin, 5-Methyl-6-octyl-[1,2,4]triazolo[1,5-a]pyrimidin-7-ylamin, 5-Ethyl-6-octyl-[1,2,4]triazolo[1,5-a]pyrimidin-7-ylamin, 5-Ethyl-6-(3,5,5-trimethyl-hexyl)-[1,2,4]triazolo[1,5-a]pyrimidin-7-ylamin, 6-Octyl-5-propyl-[1,2,4]triazolo[1,5-a]pyrimidin-7-ylamin, 5-Methoxymethyl-6-octyl-[1,2,4]triazolo[1,5-a]pyrimidin-7-ylamin, 6-Octyl-5-trifluormethyl-[1,2,4]triazolo[1,5-a]pyrimidin-7-ylamin und 5-Trifluormethyl-6-(3,5,5-trimethyl-hexyl)-[1,2,4]triazolo[1,5-a]pyrimidin-7-ylamin.

4. Fungizide Mischungen gemäß einem der Ansprüche 1 bis 3, enthaltend als Komponente 2 einen Wirkstoff II ausgewählt aus den Gruppen der Azole, Carbamate und Carbonsäureamide gemäß Anspruch 1.

5. Fungizide Mischungen gemäß einem der Ansprüche 1 bis 3, enthaltend als Komponente 2 einen Wirkstoff II ausgewählt aus den Gruppen der Strobilurine, heterocyclischen Verbindungen oder sonstigen Wirkstoffen gemäß Anspruch 1.

6. Ternäre fungizide Mischungen gemäß einem der Ansprüche 1 bis 5, enthaltend zwei Wirkstoffe II.

7. Mittel, enthaltend einen flüssigen oder festen Trägerstoff und eine Mischung gemäß einem der Ansprüche 1 bis 6.

8. Verfahren zur Bekämpfung von pflanzenpathogenen Schadpilzen, **dadurch gekennzeichnet, dass** man die Pilze, deren Lebensraum oder die vor Pilzbefall zu schützenden Pflanzen, den Boden oder Saatgüter mit einer wirksamen Menge einer Verbindung I und mindestens einer Verbindung II gemäß Anspruch 1 behandelt.

9. Verfahren nach Anspruch 8, **dadurch gekennzeichnet, dass** man die Verbindungen I und II gemäß Anspruch 1 gleichzeitig, und zwar gemeinsam oder getrennt, oder nacheinander ausbringt.

10. Verfahren nach Ansprüchen 8 oder 9, **dadurch gekennzeichnet, dass** man die Verbindungen I und II gemäß Anspruch 1 oder die Mischung gemäß einem der Ansprüche 1 bis 3 in einer Menge von 5 g/ha bis 2000 g/ha aufwendet.

11. Verfahren nach Ansprüchen 8 oder 9, **dadurch gekennzeichnet, dass** man die Verbindungen I und II gemäß Anspruch 1 oder die Mischung gemäß einem der Ansprüche 1 bis 6 in einer Menge von 1 bis 1000 g/100 kg Saatgut anwendet.

12. Verfahren nach einem der Ansprüche 8 bis 11, **dadurch gekennzeichnet, dass** Schadpilze aus der Klasse der *Oomyceten* bekämpft werden.

13. Saatgut, enthaltend eine Mischung gemäß einem der Ansprüche 1 bis 6 in einer Menge von 1 bis 1000 g/100 kg.

14. Verfahren zur Herstellung eines Mittels gemäß Anspruch 7 durch Verstrecken der Verbindungen I und II gemäß Anspruch 1 mit flüssigen oder festen Trägerstoffen.

## Claims

1. A fungicidal mixture comprising, as active components:

1) azolopyrimidinylamines of the formula I,

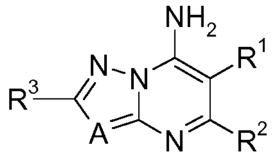

I

in which the substituents are as defined below:

$R^1$ is $C_5$-$C_{12}$-alkyl;
$R^2$ is $C_1$-$C_{12}$-alkyl, $C_1$-$C_4$-haloalkyl, $C_1$-$C_4$-alkoxy-$C_1$-$C_4$-alkyl;
$R^3$ is hydrogen or $NH_2$;
A is N;

and
2) at least one active compound II selected from the following groups:

A) azoles, selected from bitertanol, bromuconazole, cyproconazole, difenoconazole, diniconazole, enilconazole, epoxiconazole, fluquinconazole, fenbuconazole, flusilazole, flutriafol, hexaconazole, imibenconazole, ipconazole, metconazole, myclobutanil, penconazole, propiconazole, prothioconazole, simeconazole, triadimefon, triadimenol, tebuconazole, tetraconazole, triticonazole; prochloraz, pefurazoate, imazalil, triflumizole, cyazofamid;
benomyl, carbendazim, thiabendazole, fuberidazole;
ethaboxam, etridiazole, hymexazole;
B) strobilurins, selected from azoxystrobin, dimoxystrobin, enestroburin, fluoxastrobin, kresoxim-methyl, metominostrobin, orysastrobin, picoxystrobin, pyraclostrobin, trifloxystrobin, or methyl (2-chloro-5-[1-(3-methylbenzyl-oxyimino)ethyl]benzyl)carbamate, methyl (2-chloro-5-[1-(6-methylpyridin-2-yl-methoxyimino)ethyl]benzyl)carbamate, methyl 2-(ortho-((2,5-di-methylphenyloxymethylene)phenyl)-3-methoxyacrylate;
C) carboxamides, selected from carboxin, benalaxyl, boscalid, fenhexamid, flutolanil, furametpyr, mepronil, metalaxyl, mefenoxam, ofurace, oxadixyl, oxycarboxin, penthiopyrad, thifluzamide, tiadinil, N-(4'-bromobiphenyl-2-yl)-4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoromethyl-1-methylpyrazole-4-carboxamide, N-(3',4'-dichloro-5-fluorobiphenyl-2-yl)-3-difluoromethyl-1-methylpyrazole-4-carboxamide; 3,4-dichloro-N-(2-cyanophenyl)isothiazol-5-carboxamide;
dimethomorph, flumorph; flumetover, fluopicolide (picobenzamid), zoxamide;
carpropamid, diclocymet, mandipropamid; N-(2-{4-[3-(4-chlorophenyl)prop-2-ynyloxy]-3-methoxyphenyl}ethyl)-2-methanesulfonylamino-3-methylbutyramide, N-(2-{4-[3-(4-chlorophenyl)-prop-2-ynyloxy]-3-methoxyphenyl}ethyl)-2-ethan-esulfonylamino-3-methyl-butyramide;
D) heterocylic compounds, selected from fluazinam, pyrifenox; bupirimate, cyprodinil, fenarimol, ferimzone, mepanipyrim, nuarimol, pyrimethanil;
triforine;
fenpiclonil, fludioxonil; aldimorph, dodemorph, fenpropimorph, tridemorph; fenpropidin, iprodione, procymidone, vinclozolin; famoxadone, fenamidone, octhilinone, probenazole;
anilazine, diclomezine, pyroquilon, proquinazid, tricyclazole;
amisulbrom; 5-chloro-7-(4-methylpiperidin-1-yl)-6-(2,4,6-trifluorophenyl)-[1,2,4]triazolo[1,5-a]pyrimidine, 2-butoxy-6-iodo-3-propylchromen-4-one;
acibenzolar-S-methyl, captafol, captan, dazomet, folpet, fenoxanil, quinoxyfen; 3-[5-(4-chlorophenyl)-2,3-dimethylisoxazolidin-3-yl]pyridine;
E) carbamates, selected from mancozeb, maneb, metam, metiram, ferbam, propineb, thiram, zineb, ziram; diethofencarb, iprovalicarb, flubenthiavalicarb, propamocarb;
methyl 3-(4-chlorophenyl)-3-(2-isopropoxycarbonylamino-3-methyl-butyrylamino)propanoate;
and
F) other active compounds, selected from the group consisting of guanidines: dodine, iminoctadine, guazatine;
antibiotics: kasugamycin, streptomycin, polyoxine, validamycin A; nitrophenyl derivates: binapacryl, dinocap, dinobuton;

sulfur-containing heterocyclyl compounds: dithianon, isoprothiolane; organometal compounds: fentin salts, such as fentin-acetate; organophosphorus compounds: edifenphos, iprobenfos, fosetyl, fosetyl-aluminum, phosphorous acid and its salts, pyrazophos, tolclofos-methyl;
organochlorine compounds: chlorothalonil, dichlofluanid, flusulfamide, hexachlorobenzene, phthalide, pencycuron, quintozene, thiophanate-methyl, tolylfluanid;
inorganic active compounds: Bordeaux mixture, copper acetate, copper hydroxide, copper oxychloride, basic copper sulfate, sulfur;
others: cyflufenamid, cymoxanil, dimethirimol, ethirimol, furalaxyl, metrafenone and spiroxamine; growth retardants: prohexadione and its salts, trinexapac-ethyl, chlormequat, mepiquat-chloride and diflufenzopyr;

in a synergistically effective amount.

**2.** The fungicidal mixture according to claim 1, comprising a compound of the formula I and a compound of the formula II in a weight ratio of from 100:1 to 1:100.

**3.** The fungicidal mixture according to either of claims 1 and 2, comprising as component 1 a compound selected from the group consisting of 5-methyl-6-(3,5,5-trimethyl-hexyl)-[1,2,4]triazo-lo[1,5-a]pyrimidin-7-ylamine, 5-methyl-6-octyl-[1,2,4]triazolo[1,5-a]pyrimidin-7-ylamine, 5-ethyl-6-octyl-[1,2,4]triazolo[1,5-a]pyrimidin-7-ylamine, 5-ethyl-6-(3,5,5-trimethyl-hexyl)-[1,2,4]triazo-lo[1,5-a]pyrimidin-7-ylamine, 6-octyl-5-propyl-[1,2,4]triazolo[1,5-a]pyrimidin-7-ylamine, 5-methoxymethyl-6-octyl-[1,2,4]triazolo[1,5-a]pyrimidin-7-ylamine, 6-octyl-5-trifluormethyl-[1,2,4]triazolo[1,5-a]pyrimidin-7-ylamine and 5-trifluoromethyl-6-(3,5,5-trimethyl-hexyl)-[1,2,4]triazolo[1,5-a]pyrimidin-7-ylamine.

**4.** The fungicidal mixture according to any of claims 1 to 3, comprising as component 2 an active compound II selected from the groups of the azoles, carbamates and carboxamides according to claim 1.

**5.** The fungicidal mixture according to any of claims 1 to 3, comprising as component 2 an active compound II selected from the groups of the strobilurins, heterocyclic compounds or other active compounds according to claim 1.

**6.** A ternary fungicidal mixture according to any of claims 1 to 5, comprising two active compounds II.

**7.** A composition, comprising a liquid or solid carrier and a mixture according to any of claims 1 to 6.

**8.** A method for controlling phytopathogenic harmful fungi, wherein the fungi their habitat or the plants to be protected against fungal attack, the soil or seed are treated with an effective amount of a compound I and at least one compound II according to claim 1.

**9.** The method according to claim 8, wherein the compounds I and II according to claim 1 are applied simultaneously, that is jointly or separately, or in succession.

**10.** The method according to claim 8 or 9, wherein the compounds I and II according to claim 1 or the mixture according to any of claims 1 to 3 are/is applied in an amount of from 5 g/ha to 2000 g/ha.

**11.** The method according to claim 8 or 9, wherein the compounds I and II according to claim 1 or the mixture according to any of claims 1 to 6 are/is applied in an amount of from 1 to 1000 g/100 kg of seed.

**12.** The method according to any of claims 8 to 11, wherein harmful fungi from the class of the *Oomycetes* are controlled.

**13.** Seed, comprising a mixture according to any of claims 1 to 6 in an amount of from 1 to 1000 g/100 kg.

**14.** A process for preparing a composition according to claim 7 by extending the compounds I and II according to claim 1 with liquid or solid carriers.

## Revendications

**1.** Mélanges fongicides, contenant en tant que composants actifs :

1) des azolopyrimidinylamines de formule I,

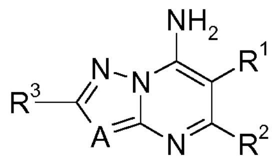

I

dans laquelle les substituants ont les significations suivantes ;

$R^1$ est un radical alkyle en $C_5$ à $C_{12}$ ;
$R^2$ est un radical alkyle en $C_1$ à $C_{12}$, halogénalkyle en $C_1$ à $C_4$, (alcoxy en $C_1$ à $C_4$) (alkyle en $C_1$ à $C_4$) ;
$R^3$ est un atome d'hydrogène ou $NH_2$ ;
A est N ;

et
2) au moins une matière active II choisie dans les groupes suivants :

A) les azoles, choisis parmi le bitertanol, le bromuconazole, le cyproconazole, le difénoconazole, le diniconazole, l'énilconazole, l'époxiconazole, le fluquinconazole, le fenbuconazole, le flusilazole, le flutriafol, l'hexaconazole, l'imibenconazole, l'ipconazole, le métconazole, le myclobutanil, le penconazole, le propiconazole, le prothioconazole, le siméconazole, le triadiméfon, le triadiménol, le tébuconazole, le tétraconazole, le triticonazole ;
le prochloroaz, le péfurazoate, l'imazalil, le triflumizole, le cyazofamide ;
le bénomyl, le carbendazim, le thiabendazole, le fubéridazole ;
l'éthaboxam, l'étridiazole, l'hyméxazole ;
B) les strobilurines choisis parmi l'azoxystrobine, la dimoxystrobine, l'énestroburine, la fluoxastrobine, le krésoxim-méthyl, la méthominostrobine, l'orysastrobine, la picoxystrobine, la pyraclostrobine, la trifloxystrobine ou l'ester méthylique de l'acide (2-chloro-5-[1-(3-méthyl-benzyloxyimino)-éthyl]-benzyl)-carbamique, l'ester méthylique de l'acide (2-chloro-5-[1-(6-méthyl-pyridin-2-ylméthoxyimino)-éthyl]-benzyl)-carbamique, l'ester méthylique de l'acide 2-((ortho-(2,5-diméthylphényl-oxyméthylène)phényl)-3-méthoxy-acrylique ;
C) Les carboxamides choisis parmi la carboxine, le bénélaxyl, le boscalide, le fenhexamide, le flutolanil, le furametpyr, le mépronil, le métalaxyl, le méfénoxam, l'ofurace, l'oxadixyl, l'oxycarboxine, le penthiopyrad, le thifluzamide, le tiadinil, le (4'-bromo-biphényle-2-yl)-amide de l'acide 4-difluorométhyl-2-méthyl-thiazole-5-carboxylique, le (4'-trifluorométhyl-biphényle-2-yl)-amide de l'acide 4-difluorométhyl-2-méthylthiazole-5-carboxylique, le (4'-chloro-3'-fluoro-biphényle-2-yl)-amide de l'acide 4-difluorométhyl-2-méthylthiazole-5-carboxylique, le (3',4'-dichloro-4-fluoro-biphényle-2-yl)-amide de l'acide 3-difluorométhyl-1-méthylpyrazole-4-carboxylique, le (3',4'-dichloro-5-fluoro-biphényle-2-yl)-amide de l'acide 3-difluorométhyl-1-méthylpyrazole-4-carboxylique, 3,4-dichloro-N-(2-cyanophényl)-isothiazole-5-carboxamide ;
le diméthomorph, le flumorph ; le flumetover, le fluopicolide (picobenzamid), le zoxamide ; le carpropamide, le diclocymet, le mandipropamide ;
le N-(2-{4-[3-(4-chloro-phényl)-prop-2-ynyloxy]-3-méthoxy-phényl}-éthyl)-2-méthansulfonylamino-3-méthylbutyramide, le N-(2-{4-[3-(4-chloro-phényl)-prop-2-ynyloxy]-3-méthoxy-phényl}-éthyl)-2-éthanesulfonylamino-3-méthylbutyramide ;
D) les composés hétérocycliques choisis parmi le fluazinam, le pyrifénox ;
le bupirimate, le cyprodinil, le fénarimol, la férimzone, le mépanipyrim, le nuarimol, le pyriméthanil ;
la triforine ;
le fenpiclonil, le fludioxonil ;
l'aldimorph, le dodémorph, le fenpropimorph, le tridémorph ; la fenpropidine, l'iprodione, la procymidone, la vinclozoline ;
la famoxadone, la fénamidone, l'octhilinone, le probénazole ;
l'amisulbrom, l'anilazine, la diclomézine, le pyroquilon, le proquinazide, le tricyclazole ;
la 5-chloro-7-(4-méthyl-pipéridin-l-yl)-6-(2,4,6-trifluoro-phényl)-[1,2,4]triazolo[1,5-a]pyrimidine
la 2-butoxy-6-iodo-3-propyl-chromèn-4-one ; l'acibenzolar-S-méthyl, le captafol, le captan, le dazomet, le folpet, le fénoxanil, le quinoxyfène ;
la 3-[5-(4-chloro-phényl)-2,3-diméthyl-isoxazolidin-3-yl]-pyridine ;

E) les carbamates choisis parmi le mancozèbe, le manèbe, le métam, le métiram, le ferbam, le propinèbe, le thiram, le zinèbe, le ziram ;
le diéthofencarb, l'iprovalicarb, le flubenthiavalicarb, le propamocarb ;
l'ester méthylique de l'acide 3-(4-chloro-phényl)-3-(2-isopropoxycarbonylamino-3-méthyl-butyrylamino)-propanoïque ;
et
F) les autres matières actives, telles que les guanidines : la dodine, l'iminoctadine, la guazatine ;
les antibiotiques : la kasugamycine, la streptomycine, la polyoxine, la validamycine A ;
les dérivés nitrophénylés : le ninapacryl, le dinocap, le dinobuton ; les composés hétérocycliques sulfurés : le dithianon, le isoprothiolane ; les composés organométalliques : les sels de fentine, tels que l'acétate de fentine ; les composés organophosphorés : l'édifenphos, l'iprobenfos, le fosétyl, le fosétyl-aluminium, l'acide phosphoreux et ses sels, le pyrazophos, le tolclofos-méthyl ; les composés organochlorés : le chlorothalonil, le dichlofluanide, le flusulfamide, l'hexachlorobenzène, le phtalide, le pencycuron, le quintozène, le thiophanate-méthyl, le tolylfluanide ; Les matières actives inorganiques : bouillie bordelaise, acétate de cuivre, hydroxyde de cuivre, oxychlorure de cuivre, sulfate basique de cuivre, soufre ; Autres : cyflufénamide, cymoxanil, diméthirimol, éthirimol, furalaxyl, métrafenone et spiroxamine ; Les retardateurs de croissance : prohexadione et ses sels, trinexapac-éthyl, chlorméquat, chlorure de mépiquat et diflufenzopyr ;

en une quantité à effet synergique.

2. Mélanges fongicides selon la revendication 1, contenant un composé de formule I et un composé de formule II selon un rapport en poids de 100:1 à 1:100.

3. Mélanges fongicides selon l'une des revendications 1 ou 2, contenant en tant que composant I un composé choisi parmi la 5-méthyl-6-(3,5,5-triméthyl-hexyl)-[1,2,4]triazolo[1,5-a]pyrimidin-7-ylamine, la 5-méthyl-6-octyl-[1,2,4]triazolo[1,5-a]pyrimidin-7-ylamine, la 5-éthyl-6-octyl-[1,2,4]triazolo[1,5-a]pyrimidin-7-ylamine, la 5-éthyl-6-(3,5,5-triméthyl-hexyl)-[1,2,4]triazolo[1,5-a]pyrimidin-7-ylamine, la 6-octyl-5-propyl-[1,2,4]triazolo[1,5-a]pyrimidin-7-ylamine, la 5-méthoxyméthyl-6-octyl-[1,2,4]triazolo[1,5-a]pyrimidin-7-ylamine, 6-octyl-5-trifluorométhyl-[1,2,4]triazolo[1,5-a]pyrimidin-7-ylamine et la 5-trifluorométhyl-6-(3,5,5-triméthyl-hexyl)-[1,2,4]triazolo[1,5-a]pyrimidin-7-ylamine.

4. Mélanges fongicides selon l'une des revendications 1 à 3, contenant en tant que composant 2 une matière active II choisie dans les groupes des azoles, des carbamates et des carboxamides selon la revendication 1.

5. Mélanges fongicides selon l'une des revendications 1 à 3, contenant en tant que composant 2 une matière active II choisie dans les groupes des strobilurines, des composés hétérocycliques ou des autres matières actives selon la revendication 1.

6. Mélanges ternaires selon l'une des revendications 1 à 5, contenant deux matières actives II.

7. Produit contenant un support liquide ou solide et un mélange selon l'une des revendications 1 à 6.

8. Procédé de maîtrise de champignons phytopathogènes, **caractérisé en ce qu'**on traite les champignons, leur habitus, ou les plantes, le sol ou les semences qu'il s'agit de protéger de l'infestation fongique, avec une quantité efficace d'un composé I et d'au moins un composé II selon la revendication 1.

9. Procédé selon la revendication 8, **caractérisé en ce qu'**on applique les composés I et II selon la revendication 1 simultanément, et plus précisément ensemble ou séparément, ou successivement.

10. Procédé selon les revendications 8 ou 9, **caractérisé en ce qu'**on utilise les composés I et II selon la revendication 1 ou le mélange selon l'une des revendications 1 à 3 en une quantité de 5 à 2000 g/ha.

11. Procédé selon les revendications 8 ou 9, **caractérisé en ce qu'**on utilise les composés I et II selon la revendication 1 ou le mélange selon l'une des revendications 1 à 6 en une quantité de 1 à 1000 g/100 kg de semence.

12. Procédé selon l'une des revendications 8 à 11, **caractérisé en ce que** ce sont des champignons pathogènes de la classe des *Oomycetes* qui sont maîtrisés.

13. Semence contenant un mélange selon l'une des revendications 1 à 6 en une quantité de 1 à 1000 g/100 kg.

**14.** Procédé de préparation d'un produit selon la revendication 7 par dilution des composés I et II selon la revendication 1 avec des supports liquides ou solides.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 71792 A
- EP 141317 A
- WO 03009687 A
- WO 05087771 A
- WO 05087772 A
- WO 05087773 A
- EP 05002426 W
- EP 2006050922 W
- EP 2006060399 W
- DE 2324020
- US 4664696 A
- GB 2098607 A
- EP 196038 A
- EP 15756 A
- EP 267778 A
- GB 857383 A
- BE 835579
- WO 9616048 A
- EP 40345 A
- EP 234242 A
- FR 2641277
- US 3991071 A
- JP 54119462 A
- US 3631176 A
- US 3657443 A
- US 3017415 A
- DE 1209799
- EP 639574 A
- JP 518249 A
- JP 532202 A
- EP 382375 A
- EP 477631 A
- WO 9727189 A
- EP 253213 A
- EP 398692 A
- WO 9715552 A
- EP 278595 A
- WO 9601256 A
- EP 460575 A
- US 3249499 A
- DE 2903612
- EP 545099 A
- JP 1104514 A
- US 3937840 A
- GB 1500581 A
- GB 2058059 A
- US 3399214 A
- JP 10130268 B
- EP 120321 A
- EP 860438 A
- WO 9942447 A
- EP 49854 A
- EP 310550 A
- GB 1218623 A
- EP 224339 A
- DD 151404 A
- DE 1901421
- DE 1198125
- DE 2752096
- DE 1164152
- GB 1312536 A
- US 3903090 A
- DE OS2207576 A
- WO 03053145 A
- US 2720480 A
- WO 9748684 A
- GB 1419121 A
- US 2553770 A
- US 5240940 A
- US 3379610 A
- US 2504404 A
- US 2791605 A
- US 3248400 A
- BE 611960
- US 1972961 A
- DE 642532
- US 2457674 A
- EP 472996 A
- JP 9323984 A
- DE 1643040
- US 2867562 A
- GB 1114155 A
- US 2526660 A
- US 3499086 A
- FR 2254276
- DE 1545790
- GB 1467561 A
- US 3290353 A
- DE 1193498
- EP 199433 A
- DE 1643347
- DE 2732257
- DE 682048
- DE OS1930540 A
- WO 9619442 A
- US 3957847 A
- GB 1182584 A
- GB 1448810 A

- US 5945567 A
- EP 281842 A
- EP 1201648 A
- EP 226917 A
- WO 9846608 A
- WO 9924413 A
- WO 04049804 A
- WO 03066609 A
- WO 0314103 A
- EP 1035122 A
- EP 1028125 A


**In der Beschreibung aufgeführte Nicht-Patentliteratur**


- *Proc. 1990 Br. Crop. Prot. Conf. - Pests Dis.,* 1990, vol. 1, 459
- *Noyaku Kagaku,* 1983, vol. 8, 575
- *Fruits,* 1973, vol. 28, 545
- *Proc. Br. Crop Prot. Conf.-Pests Dis.,* 1992, vol. 5-3, 411
- *Proc. 1988 Br. Crop Prot. Conf. - Pests Dis.,* 1988, vol. 1, 33
- *Proc. Br. Crop Prot. Conf.-Pests Dis.,* 1984, vol. 1, 413
- *Proc. 1988 Br. Crop Prot. Conf. - Pests Dis.,* 1988, vol. 2, 519
- *Proc. Br. Crop Prot. Conf. - Pests Dis.,* 1998, vol. 2, 327
- *AGROW Nr. 243,* 1995, 22
- The Pecticide Manual. 1995, 474
- *Proc. 1988 Br. Crop Prot. Conf. - Pests Dis.,* vol. 1, 65
- The Pecticide Manual. 1995, 482
- *Jpn. Pesticide Inf.,* 1970, 11
- *C. R. Seances Acad. Agric. Fr.,* 1945, vol. 31, 24
- **COLBY, S. R.** Calculating synergistic and antagonistic responses of herbicide Combinations. *Weeds,* 1967, vol. 15, 20-22